# EUROPÄISCHE PATENTSCHRIFT

(11) **EP 3 021 123 B1**
(45) Veröffentlichungstag und Bekanntmachung des Hinweises auf die Patenterteilung: **29.12.2021**
(21) Anmeldenummer: 15003252.2
(22) Anmeldetag: 16.11.2015
(51) Int. Cl.: G01N 35/10, G01N 35/00, B01L 3/02

(54) **STEUERUNGSEINRICHTUNG FÜR PIPETTIERAUTOMATEN**
CONTROL DEVICE FOR AUTOMATIC PIPETTE MACHINES
DISPOSITIF DE COMMANDE POUR AUTOMATES DE PIPETAGE

(30) Priorität: 17.11.2014 EP 14003862
(43) Veröffentlichungstag der Anmeldung: 18.05.2016
(73) Patentinhaber: BRAND GMBH + CO KG, 97877 Wertheim (DE)
(72) Erfinder: Berberich, Christian, 63930 Neunkirchen (DE); Howe, Thomas, 97877 Wertheim (DE); Schraut, Jürgen, 97855 Lengfurt (DE); Zugelder, Michael, 64285 Darmstadt (DE)
(74) Vertreter: Von Rohr Patentanwälte Partnerschaft mbB

(56) Entgegenhaltungen:
- EP-A1- 2 613 155
- EP-A2- 1 188 126
- US-A1- 2004 133 288
- US-B1- 7 247 277
- None

## Beschreibung

Die Erfindung betrifft eine Steuerungseinrichtung zur Steuerung eines Pipettierautomaten mit den Merkmalen von Anspruch 1, einen Pipettierautomaten, ein Verfahren zur Steuerung eines Pipettierautomaten gemäß Anspruch 8 und ein Computerprogrammprodukt.

Ein Pipettierautomat im Sinne der vorliegenden Erfindung ist vorzugsweise eine Vorrichtung, die zum vollautomatischen Flüssigkeitstransfer ausgebildet ist. Hierzu weist der Pipettierautomat vorzugsweise eine in mehrere Raumrichtungen bewegbare Pipettiervorrichtung auf. Grundsätzlich kann die vorschlagsgemäße Steuerungseinrichtung jedoch auch für sonstige Vorrichtungen, insbesondere für sonstige Laborautomaten, insbesondere zur Repositionierung von Substanzen oder Gegenständen, verwendet werden.

Ein Pipettierautomat der in Rede stehenden Art ist vorzugsweise dazu ausgebildet, eine Pipettiervorrichtung, auch Pipettierkopf oder Liquid End genannt, zwischen unterschiedlichen Betriebspositionen zu bewegen. Hierzu kann der Pipettierautomat eine Positioniereinrichtung aufweisen, insbesondere eine X-/Y-/Z-Verfahreinrichtung, durch die die Pipettiervorrichtung bewegt werden kann. Die Positioniereinrichtung kann auch ein Roboterarm sein oder aufweisen, durch den die Pipettiervorrichtung zumindest im Wesentlichen frei im Raum bewegbar ist.

Eine Pipettiervorrichtung im Sinne der vorliegenden Erfindung ist vorzugsweise ein verfahrbarer Kopf mit einer oder mehreren Verdrängereinheiten oder sonstigen Einrichtungen zur Erzeugung von Überdruck oder Unterdruck zum Ansaugen oder Ausstoßen von Flüssigkeiten. Die Pipettiervorrichtung weist vorzugsweise eine oder mehrere Koppelstellen zum Anbringen oder Auswechseln von einer oder mehreren Pipettenspitzen oder Spritzen auf. Den jeweiligen Pipettenspitzen bzw. Koppelstellen sind, vorzugsweise jeweils, Verdrängereinheiten zugeordnet. Die Spritze bzw. die jeweiligen Spritzen ist/sind vorzugsweise als Verdrängereinheit ausgebildet oder bilden solche.

Die Pipettiervorrichtung kann eine oder mehrere Pipettenspitzen oder Spritzen an einer oder mehreren Koppelstellen aufweisen, wobei bei Pipettiervorrichtungen mit lediglich einer einzigen Pipettenspitze oder Spritze von einer Einkanal-Pipettiervorrichtung und bei einer Pipettiervorrichtung mit mehreren Pipettenspitzen oder Spritzen von einer Mehrkanal-Pipettiervorrichtung die Rede ist.

Im Weiteren wird die Pipettiervorrichtungen in der Ausführung mit Pipettenspitzen behandelt. Deren Verdrängereinheit(en) weist/weisen meist eine oder mehrere Zylinder-Kolben-Anordnungen auf, die dazu ausgebildet ist, Flüssigkeit durch die Mündungsöffnung(en) der Pipettenspitze(n) in dieselbe(n) einzusaugen bzw. aus dieser/diesen auszustoßen. Grundsätzlich kann das Ansaugen und Ausstoßen von Flüssigkeit in bzw. aus der jeweiligen Pipettenspitze jedoch auch auf sonstige Weise erfolgen.

Der Pipettierautomat weist vorzugsweise Aufnahmeeinrichtungen für zu pipettierende Flüssigkeiten auf oder ist zur Aufnahme oder Halterung solcher Aufnahmeeinrichtungen, insbesondere sog. Näpfchen, Wells o. dgl., ausgebildet.

Der Pipettierautomat weist vorzugsweise einen Aktuator oder mehrere Aktuatoren auf, mittels derer die Pipettiervorrichtung zwischen unterschiedlichen Aufnahmeeinrichtungen bewegt wird oder bewegbar ist, und/oder mittels derer eine Flüssigkeitsaufnahme in und/oder eine Flüssigkeitsabgabe aus einer oder mehreren der Pipettenspitzen der Pipettiervorrichtung bewirkt werden kann. Diese oder weitere Aktuatoren des Pipettierautomaten sind vorzugsweise durch eine Steuerungseinrichtung steuerbar.

Ein Aktuator im Sinne der vorliegenden Erfindung ist vorzugsweise eine Einrichtung zur gesteuerten Bewirkung eines Effekts zum Betrieb des Pipettierautomaten. Insbesondere ist der Aktuator ein Motor oder sonstiger Antrieb zur Bewegung der Pipettiervorrichtung und/oder ein Antrieb zur Bewegung des Kolbens einer Zylinder-Kolben-Anordnung oder sonstigen Verdrängereinheit, um Flüssigkeit durch eine Mündungsöffnung einer Pipettenspitze in dieselbe einzusaugen bzw. aus dieser auszustoßen.

Die EP 2 613 155 A1 zeigt eine Steuerungseinrichtung für einen computergesteuerten Pipettierautomaten. Der Pipettierautomat umfasst eine Arbeitsfläche zur Anordnung von Behältern und einen motorisierten Pipettierroboter. Der Pipettierroboter weist mindestens eine Pipette zur Aufnahme und Abgabe von flüssigen Proben auf. Die Steuerungseinrichtung ist zur Steuerung des Pipetierroboters eingerichtet, so dass dieser die mindestens eine Pipette an bestimmten Positionen auf der Arbeitsfläche positionieren kann.

Der bekannte Pipettierautomat umfasst ferner eine Schnittstelle, die Eingabemittel und Darstellungsmittel aufweist. Durch die Darstellungsmittel sind mehrere Konfigurationsoberflächen darstellbar.

Die bekannte Steuerungseinrichtung ist dazu ausgebildet, durch Auswahl einer oder mehrerer Piktogramme, die zu Behältern korrespondieren, mittels der Eingabemittel den Piktogrammen ein gewünschtes Volumen zuzuordnen, das aus dem zu dem jeweiligen Piktogramm korrespondierenden Behälter aufzunehmen oder an den zu dem jeweiligen Piktogramm korrespondierenden Behälter abzugeben ist.

Die US 2004/0133288 A1 zeigt eine Steuerungseinrichtung für einen Ein-Kanal-Umformatierer. Mit Hilfe des Umformatierer können Flüssigkeiten von diese aufnehmenden Näpfchen einer Quellplatte zu Näpfchen einer Zielplatte transferiert werden. Dazu steuert die bekannte Steuerungseinrichtung einen x-y-Positionierer und einen z-Positionierer.

Mittels des x-y-Positionierers kann ein beliebiges Näpfchen der Quell- oder Zielplatte unter einer Pipettiervorrichtung zur Aufnahme bzw. Abgabe von zu pipettierender Flüssigkeit positioniert werden. Mittels des z-Positionierers kann die Pipettiervorrichtung vertikal nach oben und unten verfahren werden.

Durch eine graphische Benutzeroberfläche können Piktogramme von Quell- und Zielplatten und deren Näpfchen in einer Konfigurationsoberfläche dargestellt werden. Die Piktogramme von den Platten und deren Näpfchen können durch Klicken ausgewählt werden. Durch Auswahl eines Näpfchens der Quellplatte und anschließender Auswahl einer oder mehrerer Näpfchen der Zielplatte kann eine Verknüpfung zwischen den Näpfchen spezifiziert werden. Jedem Quell-Näpfchen können dabei mehrere Ziel-Näpfchen zugeordnet werden, wodurch mehrere Verknüpfungen spezifizierbar sind. Außerdem können mit der graphischen Benutzeroberfläche Transferparameter wie ein zu transferierendes Volumen festgelegt werden.

Die aktuell ausgewählten Näpfchen der Quellplatte können in einer ersten Farbe "R" und zuvor ausgewählte Näpfchen der Quellplatte in einer zweiten Farbe "O" hervorgehoben sein. Anhand dieser Hervorhebung von Quell-Näpfchen werden keine Ziel-Näpfchen ausgewählt und es erfolgt keine gleichzeitige Zuordnung aller ausgewählter Quell-Näpfchen zu Ziel-Näpfchen durch eine Auswahl der Ziel-Näpfchen anhand der Hervorhebung der Quell-Näpfchen. Vielmehr wird/werden nach jeder Auswahl eines Quell-Näpfchens ein oder mehrere Ziel-Näpfchen ausgewählt. Jedem einzelnen Quell-Näpfchen wird ein Ziel-Näpfchen zugeordnet, bevor ein weiteres Quell-Näpfchen ausgewählt wird bzw. ausgewählt werden kann. Werden einem einzelnen Quell-Näpfchen mehrere Ziel-Näpfchen zugeordnet, erfolgt auch dies nacheinander, indem nämlich die Ziel-Näpfchen nacheinander angeklickt werden.

In dem Dokument US 7,247,277 B1 ist eine automatische Synthesemaschine zur Synthese von Verbindungen unter Verwendung mehrerer Gefäße offenbart. Die automatische Synthesemaschine umfasst ein Auswahlmittel zum Auswählen eines bestimmten Gefäßes aus einer Vielzahl von Gefäßen, eine Anzeigevorrichtung zum Anzeigen des durch das Auswahlmittel ausgewählten Gefäßes und ein Analysemittel zum Analysieren eines Protokolls, das eine Reihe von Betriebsverfahren zur Synthese von Verbindungen vorschreibt. Ausgewählte Gefäße können hervorgehoben sein. Anhand dieser Hervorhebung von Gefäßen werden keine weiteren Gefäße ausgewählt. Dementsprechend erfolgt keine gleichzeitige Zuordnung aller ausgewählter Quell-Gefäße zu Ziel-Gefäßen durch eine Auswahl der Ziel-Gefäße anhand der Hervorhebung der Quell-Gefäße.

Der vorliegenden Erfindung liegt das Problem zugrunde, eine Steuerungseinrichtung zur Steuerung eines Pipettierautomaten, einen Pipettierautomaten mit einer solchen Steuerungseinrichtung sowie ein Verfahren zur Steuerung eines Pipettierautomaten und ein Computerprogrammprodukt anzugeben, wodurch eine anwenderfreundliche, schnellere, weniger fehleranfällige und ressourcenschonende Betriebsweise ermöglicht wird.

Die zuvor aufgezeigte Problemstellung ist gelöst durch eine Steuerungseinrichtung gemäß Anspruch 1, durch einen Pipettierautomaten gemäß Anspruch 7, durch ein Verfahren zur Steuerung eines Pipettierautomaten gemäß Anspruch 8 oder durch ein Computerprogrammprodukt gemäß Anspruch 14. Vorteilhafte Weiterbildungen sind Gegenstand der jeweiligen Unteransprüche.

Ein erster Aspekt der vorliegenden Erfindung betrifft eine Steuerungseinrichtung zur Steuerung eines Pipettierautomaten, insbesondere eines Pipettierautomaten mit den eingangs beschriebenen Merkmalen. Die Steuerungseinrichtung ist zur Steuerung mindestens eines Aktuators des Pipettierautomaten ausgebildet, wobei der Aktuator zur Bewegung einer Pipettiervorrichtung zwischen Aufnahmeeinrichtungen zur Aufnahme oder Abgabe von zu pipettierenden Flüssigkeiten ausgebildet ist. Die Pipettiervorrichtung ist zur Aufnahme und zur Abgabe von zu pipettierenden Flüssigkeiten ausgebildet, insbesondere durch Erzeugung eines Unterdrucks oder Überdrucks in der Pipettiervorrichtung.

Die Steuerungseinrichtung zur Steuerung des Pipettierautomaten weist eine Eingabeeinrichtung und eine Anzeigeeinrichtung auf. Zusätzlich kann die Steuerungseinrichtung mindestens eine Speichereinrichtung, insbesondere einen Arbeitsspeicher und/oder einen Festspeicher wie eine Festplatte, und/oder einen Prozessor auf. Ferner weist die Steuerungseinrichtung vorzugsweise eine Schnittstelle auf, die dazu ausgebildet ist, den oder die Aktuatoren des Pipettierautomaten zu steuern.

Eine Eingabeeinrichtung im Sinne der vorliegenden Erfindung ist vorzugsweise eine Tastatur, eine Computermaus, ein Trackball, ein Touchscreen, eine Kamera, ein Sensor oder eine sonstige Einrichtung zur Steuerung eines oder zur Dateneingabe in einen Computer o. dgl.

Eine Anzeigeeinrichtung ist vorzugsweise ein Monitor, ein Display, ein Touchscreen, ein Projektor oder eine sonstige Einrichtung zur Anzeige einer graphischen Benutzeroberfläche, insbesondere einer oder mehrerer Konfigurationsoberflächen.

Durch die Anzeigeeinrichtung sind mehrere unterschiedliche Konfigurationsoberflächen darstellbar.

Auf der Anzeigeeinrichtung sind in einer Konfigurationsoberfläche mehrere graphische Aufnahmeeinrichtungs-Äquivalente darstellbar, die jeweils mindestens eine Aufnahmeeinrichtung repräsentieren und zu Aufnahmeeinrichtungen korrespondieren.

Eine Aufnahmeeinrichtung im Sinne der vorliegenden Erfindung ist vorzugsweise ein Gefäß, eine Ausnehmung, Einbuchtung, Vertiefung und/oder vordefinierte Position, wobei die Aufnahmeeinrichtung dazu ausgebildet ist, zu pipettierende Flüssigkeit aufzunehmen und bereitzustellen.

Die Steuerungseinrichtung ist dazu ausgebildet, durch Auswahl eines oder mehrerer graphischer Aufnahmeeinrichtungs-Äquivalente/s mittels der Eingabeeinrichtung, und zwar in derselben Konfigurationsoberfläche, dem/den Aufnahmeeinrichtungs-Äquivalent/en mindestens einen Transferparameter zuzuordnen. Der Transferparameter korrespondiert zu einem Transfervolumen, das aus der zu dem jeweiligen Aufnahmeeinrichtungs-Äquivalent korrespondierenden Aufnahmeeinrichtung aufzunehmen oder an die zu dem jeweiligen Aufnahmeeinrichtungs-Äquivalent korrespondierende Aufnahmeeinrichtung abzugeben ist.

Ein graphisches Aufnahmeeinrichtungs-Äquivalent im Sinne der vorliegenden Erfindung ist vorzugsweise ein graphisches Mittel zur Repräsentation mindestens einer Aufnahmeeinrichtung in einer durch die Anzeigeeinrichtung darstellbaren oder dargestellten Konfigurationsoberfläche. Das jeweilige Aufnahmeeinrichtungs-Äquivalent korrespondiert vorzugsweise zu einer bestimmten Aufnahmeeinrichtung des Pipettierautomaten, insbesondere in seiner Form und/oder Position bzw. Lage anderen Aufnahmeeinrichtungen bzw. Aufnahmeeinrichtungs-Äquivalenten gegenüber. Besonders bevorzugt sind die Aufnahmeeinrichtungen des zu steuernden Pipettierautomaten mittels der Aufnahmeeinrichtungs-Äquivalente in der Konfigurationsoberfläche schematisch dargestellt, darstellbar oder repräsentiert.

Der Transferparameter korrespondiert zu einem Transfervolumen.

Das Transfervolumen ein bestimmtes Flüssigkeitsvolumen, das aus der jeweiligen Aufnahmeeinrichtung aufgenommen werden soll oder an die jeweilige Aufnahmeeinrichtung abgegeben werden soll. Das Transfervolumen kann ein aufzunehmendes bzw. zu entnehmendes sein, also ein aus einer Aufnahmeeinrichtung zu entnehmendes und/oder in eine Pipettenspitze oder Spritze aufzunehmendes, insbesondere einzusaugendes, Volumen der zu pipettierenden Flüssigkeit. Die Begriffe "aufzunehmendes" und "zu entnehmendes" Transfervolumen sind bevorzugt synonym und austauschbar. Alternativ oder zusätzlich kann das Transfervolumen ein abzugebendes Volumen sein, also ein aus einer Pipettenspitze oder Spritze zu beförderndes Volumen und/oder in die Aufnahmeeinrichtung abzugebendes Volumen der zu pipettierenden Flüssigkeit. Aufzunehmende und abzugebende Transfervolumina können unterschieden werden, beispielsweise durch ein Vorzeichen oder eine sonstige Kennzeichnung des Transferparameters bzw. Transfervolumens.

Erfindungsgemäß ist die Steuerungseinrichtung dazu ausgebildet, dass
- in der Konfigurationsoberfläche mehrere Aufnahmeeinrichtungs-Äquivalente, aus deren korrespondierenden Aufnahmeeinrichtungen Flüssigkeit entnommen werden soll, nacheinander oder gleichzeitig als Quell-Aufnahmeeinrichtungs-Äquivalente eines Quell-Pipettiereinheit-Äquivalents ausgewählt werden
- in der Konfigurationsoberfläche zunächst durch Auswahl der Quell-Aufnahmeeinrichtungs-Äquivalente eine graphische Repräsentation der ausgewählten Quell-Aufnahmeeinrichtungs-Äquivalente erzeugt wird,
- in der Konfigurationsoberfläche die graphische Repräsentation der ausgewählten Quell-Aufnahmeeinrichtungs-Äquivalente dann hinsichtlich der Anzahl und/oder Anordnung der ausgewählten Quell-Aufnahmeeinrichtungs-Äquivalente verändert wird, und
- in der Konfigurationsoberfläche schließlich anhand der graphischen Repräsentation mehrere weitere Aufnahmeeinrichtungs-Äquivalente als Ziel-Aufnahmeeinrichtungs-Äquivalente eines Ziel-Pipettiereinheit-Äquivalents, in deren korrespondierende Aufnahmeeinrichtungen Flüssigkeit abgegeben werden soll, ausgewählt werden und dadurch die ausgewählten Quell-Aufnahmeeinrichtungs-Äquivalente gleichzeitig den ausgewählten Ziel-Aufnahmeeinrichtungs-Äquivalenten derart zugeordnet werden, dass sich die Anordnung und/oder Anzahl der zugeordneten Ziel-Aufnahmeeinrichtungs-Äquivalente von der Anordnung und/oder Anzahl der ausgewählten Quell-Aufnahmeeinrichtungs-Äquivalente unterscheidet.

Dadurch werden den ausgewählten Quell-Aufnahmeeinrichtungs-Äquivalenten und den ihnen zugeordneten Ziel-Aufnahmeeinrichtungs-Äquivalenten mittels der Eingabeeinrichtung Transferparameter derart zugeordnet, dass jeweils das korrespondierende Transfervolumen aus den zu den ausgewählten Quell-Aufnahmeeinrichtungs-Äquivalenten korrespondierenden Aufnahmeeinrichtungen in die zu den zugeordneten Ziel-Aufnahmeeinrichtungs-Äquivalenten korrespondierenden Aufnahmeeinrichtungen transferiert wird.

Die vorschlagsgemäße Steuerungseinrichtung ist dazu ausgebildet, dass die zugeordneten Ziel-Aufnahmeeinrichtungs-Äquivalente in derselben Konfigurationsoberfläche wie die ausgewählten Quell-Aufnahmeeinrichtungs-Äquivalente dargestellt werden.

Die vorschlagsgemäße Steuerungseinrichtung bietet den Vorteil einer komfortablen, schnellen und zuverlässigen Steuerung des Pipettierautomaten. Insbesondere kann mit der vorschlagsgemäßen Steuerungseinrichtung komfortabel und schnell ein Transfermuster erzeugt, geändert und gleichzeitig mehreren Ziel-Aufnahmeeinrichtungs-Äquivalenten zugewiesen werden.

Unter einem Transfermuster wird hier eine graphische Repräsentation von Aufnahmeeinrichtungs-Äquivalenten verstanden, die abbildet, wie Quell-Aufnahmeeinrichtungs-Äquivalente Ziel-Aufnahmeeinrichtungs-Äquivalenten zugeordnet werden. Insofern repräsentiert ein Transfermuster eine Zuordnungsvorschrift. Ein Transfermuster kann, z. B. mittels der Eingabeeinrichtung, vorgegeben werden. Ein Transfermuster kann auch dadurch erzeugt werden, dass zunächst Quell-Aufnahmeeinrichtungs-Äquivalente ausgewählt werden, wobei zunächst eine graphische Repräsentation bzw. Markierung der ausgewählten Quell-Aufnahmeeinrichtungs-Äquivalente erfolgt. Die graphische Repräsentation bzw. Markierung kann dann hinsichtlich Anzahl und Anordnung der Aufnahmeeinrichtungs-Äquivalente verändert werden. Schließlich können anhand der graphischen Repräsentation bzw. Markierung mehrere Ziel-Aufnahmeeinrichtungs-Äquivalente ausgewählt werden. Durch die Auswahl werden die Quell-Aufnahmeeinrichtungs-Äquivalente den Ziel-Aufnahmeeinrichtungs-Äquivalenten zugeordnet, wodurch den ausgewählten Quell-Aufnahmeeinrichtungs-Äquivalenten und den ihnen zugeordneten Ziel-Aufnahmeeinrichtungs-Äquivalenten Transferparameter derart zugeordnet werden, dass jeweils das korrespondierende Transfervolumen aus den zu den Quell-Aufnahmeeinrichtungs-Äquivalenten korrespondierenden Aufnahmeeinrichtungen in die zu den zugeordneten Ziel-Aufnahmeeinrichtungs-Äquivalenten korrespondierenden Aufnahmeeinrichtungen transferierbar ist.

Die vorliegende Erfindung geht also von dem Gedanken aus, dass Flüssigkeit zwischen einer spezifizierbaren Auswahl an Aufnahmeeinrichtungen transferierbar und dabei deren Zuordnung über eine Konfigurationsoberfläche gleichzeitig vornehmbar ist.

Ein weiterer, aber nicht beanspruchter Aspekt betrifft eine Steuerungseinrichtung zur Steuerung eines Pipettierautomaten, die zur Steuerung mindestens eines Aktuators zur Bewegung einer Pipettiervorrichtung zwischen Aufnahmeeinrichtungen für zu pipettierende Flüssigkeiten und zur Aufnahme bzw. Abgabe von zu pipettierenden Flüssigkeiten ausgebildet ist. Die Steuerungseinrichtung weist eine Eingabeeinrichtung und eine Anzeigeeinrichtung auf, wobei durch die Anzeigeeinrichtung mehrere Konfigurationsoberflächen darstellbar sind.

Die Steuerungseinrichtung ist dazu ausgebildet, durch Auswahl einer oder mehrerer graphischer Aufnahmeeinrichtungs-Äquivalente mittels der Eingabeeinrichtung den Aufnahmeeinrichtungs-Äquivalenten mindestens einen Transferparameter zuzuordnen, der zu einem Transfervolumen korrespondiert, das aus der zu dem jeweiligen Aufnahmeeinrichtungs-Äquivalent korrespondierenden Aufnahmeeinrichtung aufzunehmen oder an die zu dem jeweiligen Aufnahmeeinrichtungs-Äquivalent korrespondierende Aufnahmeeinrichtung abzugeben ist.

Gemäß diesem nicht beanspruchten Aspekt sind mehrere Aufnahmeeinrichtungs-Äquivalente, aus deren korrespondierenden Aufnahmeeinrichtungen Flüssigkeit entnommen werden soll, nacheinander oder gleichzeitig als Quell-Aufnahmeeinrichtungs-Äquivalente eines Quell-Pipettiereinheit-Äquivalents auswählbar. Die ausgewählten Quell-Aufnahmeeinrichtungs-Äquivalente sind in mindestens zwei Untergruppen aufteilbar. Diese Untergruppen sind nacheinander weiteren Aufnahmeeinrichtungs-Äquivalenten als Ziel-Aufnahmeeinrichtungs-Äquivalente eines Ziel-Pipettiereinheit-Äquivalents, in deren korrespondierende Aufnahmeeinrichtungen Flüssigkeit abgegeben werden soll, zuordenbar. Dabei sind alle Quell-Aufnahmeeinrichtungs-Äquivalente jeder Untergruppe gleichzeitig den jeweiligen Ziel-Aufnahmeeinrichtungs-Äquivalenten zuordenbar.

Dadurch werden den ausgewählten Quell-Aufnahmeeinrichtungs-Äquivalenten und den ihnen zugeordneten Ziel-Aufnahmeeinrichtungs-Äquivalenten Transferparameter derart zugeordnet, dass jeweils das korrespondierende Transfervolumen aus den zu den ausgewählten Quell-Aufnahmeeinrichtungs-Äquivalenten korrespondierenden Aufnahmeeinrichtungen in die zu den zugeordneten Ziel-Aufnahmeeinrichtungs-Äquivalenten korrespondierenden Aufnahmeeinrichtungen transferierbar ist.

Die zugeordneten Ziel-Aufnahmeeinrichtungs-Äquivalente sind dabei in derselben Konfigurationsoberfläche wie die ausgewählten Quell-Aufnahmeeinrichtungs-Äquivalente darstellbar.

Diese nicht beanspruchte Steuerungseinrichtung bietet den Vorteil einer komfortablen, schnellen und zuverlässigen Steuerung des Pipettierautomaten. Insbesondere können aus einer großen Gruppe von ausgewählten Quell-Aufnahmeeinrichtungs-Äquivalenten kleinere Untergruppen schrittweise mehreren Ziel-Aufnahmeeinrichtungs-Äquivalenten zugewiesen werden, ohne eine erneute Auswahl von Quell-Aufnahmeeinrichtungs-Äquivalenten vorzunehmen.

Dieser nicht beanspruchte Aspekt kann mit den zuvor zum ersten unabhängigen Aspekt erläuterten Merkmalen in vorteilhafter Weise kombiniert werden. So kann z. B. nach dem Aufteilen in Untergruppen die Anordnung und/oder Anzahl der Aufnahmeeinrichtungs-Äquivalente einer oder aller Untergruppe/n verändert werden, bevor die Aufnahmeeinrichtungs-Äquivalente dieser Untergruppe/n zugeordnet werden.

Ein weiterer, auch unabhängig realisierbarer Aspekt der vorliegenden Erfindung betrifft einen Pipettierautomaten mit einer der zuvor beschriebenen Steuerungseinrichtungen, wobei der Pipettierautomat mindestens einen Aktuator zur Bewegung der Pipettiervorrichtung zwischen den Aufnahmeeinrichtungen aufweist, wobei die Pipettiervorrichtung zur Flüssigkeitsaufnahme und zur Flüssigkeitsabgabe ausgebildet ist und wobei der Aktuator durch die Steuerungseinrichtung steuerbar ist.

Ein weiterer, nicht beanspruchter Aspekt betrifft die Verwendung einer der zuvor beschriebenen Steuerungseinrichtungen zur Steuerung des erläuterten Pipettierautomaten.

Ein weiterer, auch unabhängig realisierbarer Aspekt der vorliegenden Erfindung betrifft ein Verfahren zur Steuerung des Pipettierautomaten zur Steuerung mindestens eines Aktuators des Pipettierautomaten, wobei der Aktuator zur Bewegung der Pipettiervorrichtung zwischen Aufnahmeeinrichtungen für zu pipettierende Flüssigkeiten ausgebildet ist, wobei die Pipettiervorrichtung zur Aufnahme von zu pipettierenden Flüssigkeiten und zur Abgabe von zu pipettierenden Flüssigkeiten ausgebildet ist. Die Steuerung erfolgt mittels einer Steuerungseinrichtung, die eine Eingabeeinrichtung und eine Anzeigeeinrichtung aufweist. Durch die Anzeigeeinrichtung werden mehrere Konfigurationsoberflächen dargestellt.

In dem vorschlagsgemäßen Verfahren wird durch Auswahl eines oder mehrerer graphischer Aufnahmeeinrichtungs-Äquivalente/s mittels der Eingabeeinrichtung dem/den Aufnahmeeinrichtungs-Äquivalent/en mindestens ein Transferparameter zugeordnet, der zu einem Transfervolumen korrespondiert, das aus der zu dem jeweiligen Aufnahmeeinrichtungs-Äquivalent korrespondierenden Aufnahmeeinrichtung aufzunehmen oder an die zu dem jeweiligen Aufnahmeeinrichtungs-Äquivalent korrespondierende Aufnahmeeinrichtung abzugebend ist.

In dem vorschlagsgemäßen Verfahren werden in der Konfigurationsoberfläche mehrere Aufnahmeeinrichtungs-Äquivalente, aus deren korrespondierenden Aufnahmeeinrichtungen Flüssigkeit entnommen werden soll, nacheinander oder gleichzeitig als Quell-Aufnahmeeinrichtungs-Äquivalente eines Quell-Pipettiereinheit-Äquivalents ausgewählt. Zunächst wird in der Konfigurationsoberfläche durch Auswahl der Quell-Aufnahmeeinrichtungs-Äquivalente eine graphische Repräsentation der ausgewählten Quell-Aufnahmeeinrichtungs-Äquivalente erzeugt. Dann wird in der Konfigurationsoberfläche die graphische Repräsentation der ausgewählten Quell-Aufnahmeeinrichtungs-Äquivalente hinsichtlich der Anzahl und/oder Anordnung der ausgewählten Quell-Aufnahmeeinrichtungs-Äquivalente verändert. Schließlich werden in der Konfigurationsoberfläche anhand der graphischen Repräsentation mehrere weitere Aufnahmeeinrichtungs-Äquivalente als Ziel-Aufnahmeeinrichtungs-Äquivalente eines Ziel-Pipettiereinheit-Äquivalents, in deren korrespondierende Aufnahmeeinrichtungen Flüssigkeit abgegeben werden soll, ausgewählt. Dadurch werden die ausgewählten Quell-Aufnahmeeinrichtungs-Äquivalente gleichzeitig den ausgewählten Ziel-Aufnahmeeinrichtungs-Äquivalenten derart zugeordnet, dass sich die Anordnung und/oder Anzahl der zugeordneten Ziel-Aufnahmeeinrichtungs-Äquivalente von der Anordnung und/oder Anzahl der ausgewählten Quell-Aufnahmeeinrichtungs-Äquivalente unterscheidet.

Dadurch werden den ausgewählten Quell-Aufnahmeeinrichtungs-Äquivalenten und den ihnen zugeordneten Ziel-Aufnahmeeinrichtungs-Äquivalenten mittels der Eingabeeinrichtung Transferparameter derart zugeordnet, dass jeweils das korrespondierende Transfervolumen aus den zu den ausgewählten Quell-Aufnahmeeinrichtungs-Äquivalenten korrespondierenden Aufnahmeeinrichtungen in die zu den zugeordneten Ziel-Aufnahmeeinrichtungs-Äquivalenten korrespondierenden Aufnahmeeinrichtungen transferiert wird.

Die zugeordneten Ziel-Aufnahmeeinrichtungs-Äquivalente werden dabei in derselben Konfigurationsoberfläche wie die ausgewählten Quell-Aufnahmeeinrichtungs-Äquivalente dargestellt.

Ein weiterer, nicht beanspruchter Aspekt betrifft ein Verfahren zur Steuerung des Pipettierautomaten zur Steuerung mindestens eines Aktuators zur Bewegung der Pipettiervorrichtung zwischen Aufnahmeeinrichtungen für zu pipettierende Flüssigkeiten, zur Aufnahme von zu pipettierenden Flüssigkeiten und/oder zur Abgabe von zu pipettierenden Flüssigkeiten, mittels einer Steuerungseinrichtung, die eine Eingabeeinrichtung und eine Anzeigeeinrichtung aufweist. Durch die Anzeigeeinrichtung sind mehrere Konfigurationsoberflächen darstellbar.

In dem nicht beanspruchten Verfahren wird durch Auswahl eines oder mehrerer graphischer Aufnahmeeinrichtungs-Äquivalente/s mittels der Eingabeeinrichtung dem/den Aufnahmeeinrichtungs-Äquivalent/en mindestens ein Transferparameter zugeordnet, der zu einem Transfervolumen korrespondiert, das aus der zu dem jeweiligen Aufnahmeeinrichtungs-Äquivalent korrespondierenden Aufnahmeeinrichtung aufzunehmen oder an die zu dem jeweiligen Aufnahmeeinrichtungs-Äquivalent korrespondierende Aufnahmeeinrichtung abzugebend ist.

In dem nicht beanspruchten Verfahren werden mehrere Aufnahmeeinrichtungs-Äquivalente, aus deren korrespondierenden Aufnahmeeinrichtungen Flüssigkeit entnommen werden soll, nacheinander oder gleichzeitig als Quell-Aufnahmeeinrichtungs-Äquivalente eines Quell-Pipettiereinheit-Äquivalents ausgewählt. Die ausgewählten Quell-Aufnahmeeinrichtungs-Äquivalente werden in mindestens zwei Untergruppen aufgeteilt. Diese Untergruppen werden nacheinander weiteren Aufnahmeeinrichtungs-Äquivalenten als Ziel-Aufnahmeeinrichtungs-Äquivalente eines Ziel-Pipettiereinheit-Äquivalents, in deren korrespondierende Aufnahmeeinrichtungen Flüssigkeit abgegeben werden soll, zugeteilt. Dabei werden alle Quell-Aufnahmeeinrichtungs-Äquivalente jeder Untergruppe gleichzeitig den jeweiligen Ziel-Aufnahmeeinrichtungs-Äquivalenten zugeordnet.

Dadurch werden den ausgewählten Quell-Aufnahmeeinrichtungs-Äquivalenten und den ihnen zugeordneten Ziel-Aufnahmeeinrichtungs-Äquivalenten Transferparameter derart zugeordnet, dass jeweils das korrespondierende Transfervolumen aus den zu den ausgewählten Quell-Aufnahmeeinrichtungs-Äquivalenten korrespondierenden Aufnahmeeinrichtungen in die zu den zugeordneten Ziel-Aufnahmeeinrichtungs-Äquivalenten korrespondierenden Aufnahmeeinrichtungen transferiert.

Die zugeordneten Ziel-Aufnahmeeinrichtungs-Äquivalente werden dabei in derselben Konfigurationsoberfläche wie die ausgewählten Quell-Aufnahmeeinrichtungs-Äquivalente dargestellt.

Ein weiterer, nicht beanspruchter Aspekt betrifft ein computerlesbares Speichermedium, auf dem ein Programm zur Ausführung eines der vorschlagsgemäßen Verfahren gespeichert ist. Ein computerlesbares Speichermedium ist insbesondere ein Speicherstick, eine Speicherkarte, ein Flash-Speicher, eine CD, eine DVD, eine Blu-Ray oder ein sonstiges Speichermedium wie eine Festplatte eines Servers, von dem das Programm zur Ausführung des vorschlagsgemäßen Verfahrens abrufbar sein kann.

Ein weiterer, auch unabhängig realisierbarer Aspekt der vorliegenden Erfindung betrifft ein Computerprogrammprodukt mit Programmcodemitteln, die dazu ausgebildet sind, das erfindungsgemäße Verfahren auszuführen, wenn die Programmcodemittel auf einem Computer oder durch einen Prozessor ausgeführt werden. Ein Computerprogrammprodukt ist insbesondere eine Datei oder ein Datenstrom, der zum Abruf und zum Abspeichern, insbesondere auf Online-Portalen oder über das Internet, anbietbar ist.

Die vorgenannten Aspekte und Merkmale können unabhängig voneinander, insbesondere unabhängig von sonstigen Merkmalen der unabhängigen Patentansprüche, aber auch in beliebiger Kombination realisiert werden.

Weitere Vorteile, Merkmale, Eigenschaften und Aspekte der vorliegenden Erfindung ergeben sich aus den Ansprüchen und der folgenden Beschreibung anhand der Zeichnung. Es zeigt:
- Fig. 1: in schematischer Darstellung eine vorschlagsgemäße Pipettiervorrichtung mit einer vorschlagsgemäßen Steuerungseinrichtung,
- Fig. 2: in schematischer Darstellung eine erste Konfigurationsoberfläche der vorschlagsgemäßen Steuerungseinrichtung,
- Fig. 3: in schematischer Darstellung eine zweite Konfigurationsoberfläche der vorschlagsgemäßen Steuerungseinrichtung,
- Fig. 4: in schematischer Darstellung eine dritte Konfigurationsoberfläche der vorschlagsgemäßen Steuerungseinrichtung,
- Fig. 5: in schematischer Darstellung eine vierte Konfigurationsoberfläche der vorschlagsgemäßen Steuerungseinrichtung,
- Fig. 6: in schematischer Darstellung eine fünfte Konfigurationsoberfläche der vorschlagsgemäßen Steuerungseinrichtung,
- Fig. 7: in schematischer Darstellung eine sechste Konfigurationsoberfläche der vorschlagsgemäßen Steuerungseinrichtung,
- Fig. 8: in schematischer Darstellung eine siebte Konfigurationsoberfläche der vorschlagsgemäßen Steuerungseinrichtung,
- Fig. 9: in schematischer Darstellung eine achte Konfigurationsoberfläche der vorschlagsgemäßen Steuerungseinrichtung,
- Fig. 10: in schematischer Darstellung ein erstes Beispiel einer neunten Konfigurationsoberfläche der vorschlagsgemäßen Steuerungseinrichtung,
- Fig. 11: in schematischer Darstellung ein zweites Beispiel der neunten Konfigurationsoberfläche der vorschlagsgemäßen Steuerungseinrichtung,
- Fig. 12: in schematischer Darstellung ein drittes Beispiel der neunten Konfigurationsoberfläche der vorschlagsgemäßen Steuerungseinrichtung,
- Fig. 14: in schematischer Darstellung ein viertes Beispiel der neunten Konfigurationsoberfläche der vorschlagsgemäßen Steuerungseinrichtung,
- Fig. 15: in schematischer Darstellung ein erstes Beispiel einer elften Konfigurationsoberfläche der vorschlagsgemäßen Steuerungseinrichtung,
- Fig. 17: in schematischer Darstellung ein zweites Beispiel der elften Konfigurationsoberfläche der vorschlagsgemäßen Steuerungseinrichtung,

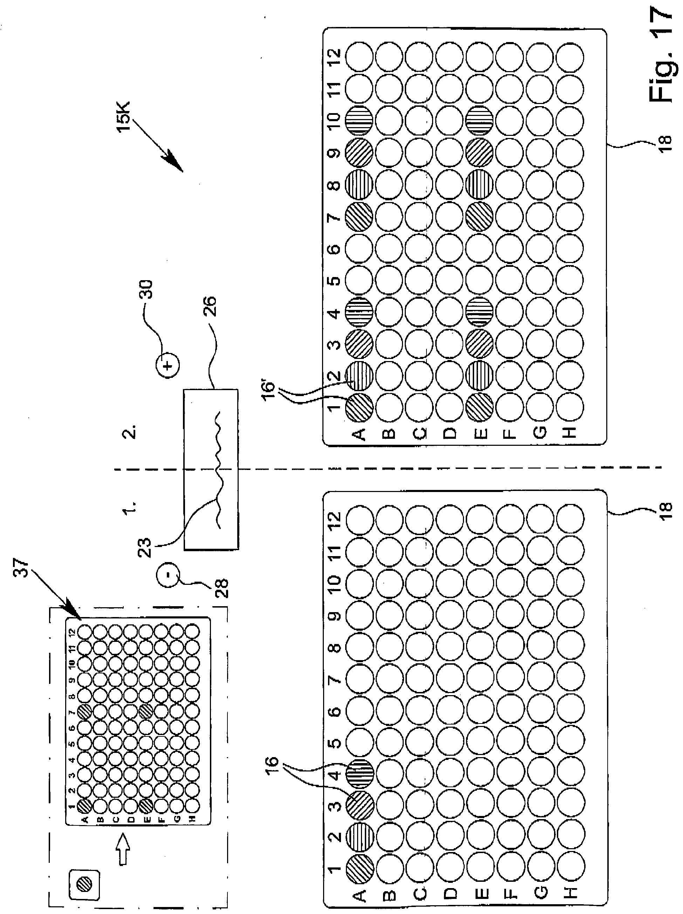

- Fig. 17: in schematischer Darstellung ein zweites Beispiel der elften Konfigurationsoberfläche der vorschlagsgemäßen Steuerungseinrichtung,

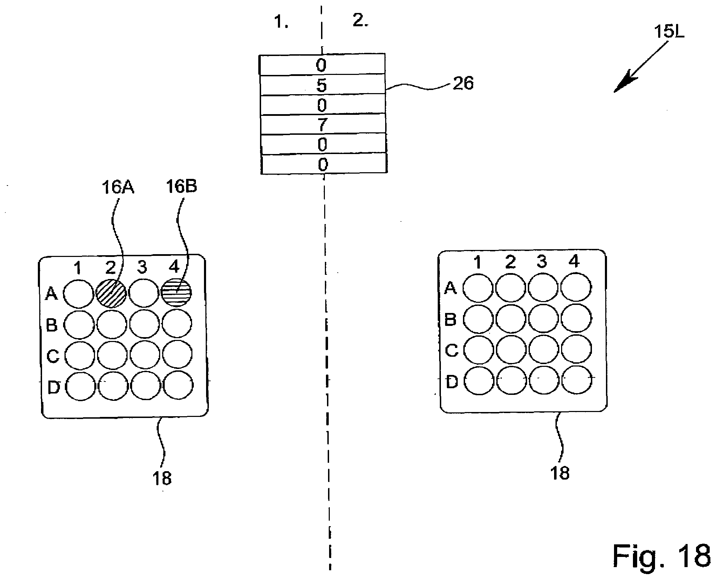

- Fig. 18: in schematischer Darstellung eine zwölfte Konfigurationsoberfläche der vorschlagsgemäßen Steuerungseinrichtung.

In den Figuren werden für gleiche oder ähnliche Teile oder Elemente dieselben Bezugszeichen verwendet, wobei gleiche oder ähnliche Eigenschaften erreicht werden können, auch wenn von einer wiederholten Beschreibung abgesehen wird.

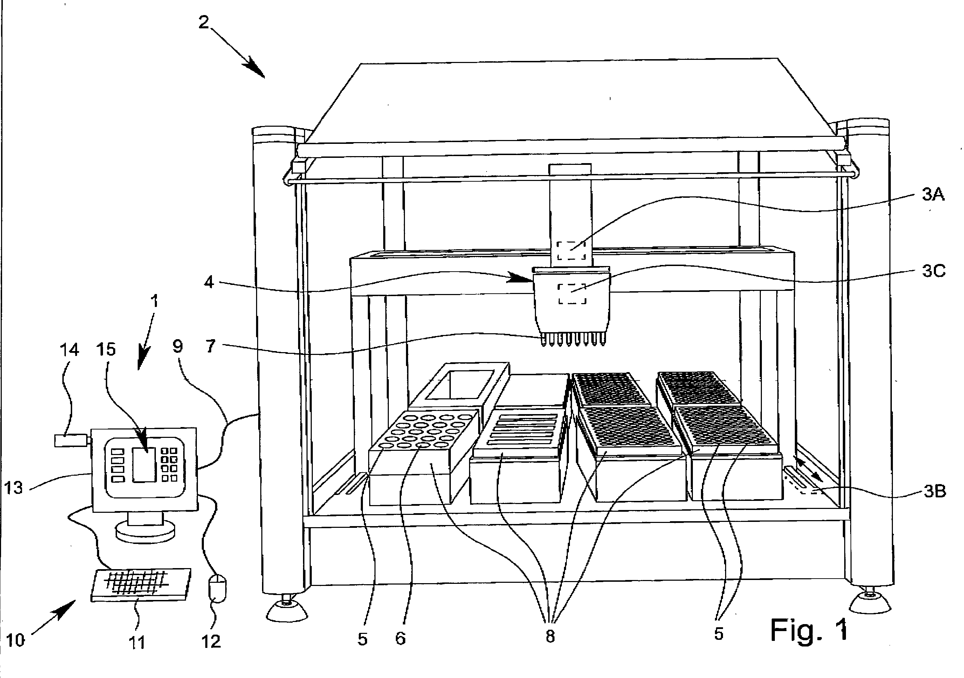

Fig. 1 zeigt in einer schematischen Darstellung eine vorschlagsgemäße Steuerungseinrichtung 1 zur Steuerung eines Pipettierautomaten 2. Die Steuerungseinrichtung 1 ist zur Steuerung mindestens eines Aktuators 3A, 3B oder 3C des Pipettierautomaten 2 ausgebildet.

Die Steuerungseinrichtung 1 ist dazu ausgebildet, einen oder mehrere der Aktuatoren 3A, 3B, 3C zur Bewegung einer Pipettiervorrichtung 4 zwischen Aufnahmeeinrichtungen 5 für zu pipettierende Flüssigkeiten 6 zu bewegen. Zusätzlich ist vorgesehen, dass die Steuerungseinrichtung 1 ein oder mehrere der Aktuatoren 3A, 3B, 3C derart steuern kann, dass zu pipettierende Flüssigkeiten 6 mit der Pipettiervorrichtung 4 aufgenommen und abgegeben werden können.

Im Darstellungsbeispiel bilden die Aktuatoren 3A, 3B eine Positioniereinrichtung zur Änderung der Position der Pipettiervorrichtung 4, bevorzugt in alle drei Raumrichtungen. Der Aktuator 3C ist vorzugsweise als Antrieb für eine Zylinder-Kolben-Einheit zum Ansaugen und Abgeben von Flüssigkeit ausgebildet. Hier gibt es jedoch auch alternative Varianten.

Die Pipettiervorrichtung 4 ist im Darstellungsbeispiel eine Mehrkanal-Pipettiervorrichtung, die vorzugsweise mehrere Pipettenspitzen 7 aufweist bzw. dazu ausgebildet ist, aus mehreren, benachbarten Aufnahmeeinrichtungen 5 Flüssigkeit 6 zu entnehmen bzw. in benachbarte Aufnahmeeinrichtungen 5 abzugeben. Die Pipettiervorrichtung 4 kann jedoch auch eine Einkanal-Pipettiervorrichtung 4 sein, bei der lediglich eine Pipettenspitze 7 vorgesehen ist.

Der Pipettierautomat 2 kann dazu ausgebildet sein, dass die Pipettiervorrichtung 4 auswechselbar ist, insbesondere zum Wechsel zwischen einer Einkanal-Pipettiervorrichtung 4 und einer Mehrkanal-Pipettiervorrichtung 4.

Die Pipettiervorrichtung 4 weist vorzugsweise den Aktuator 3C auf und ist hierdurch oder auf sonstige Weise dazu ausgebildet, Flüssigkeit 6 in die Pipettenspitze(n) 7 aufzunehmen und hieraus abzugeben. Dies erfolgt insbesondere durch die bereits erwähnte Zylinder-Kolben-Einheit oder einen sonstigen Verdrängungsmechanismus, der durch den Aktuator 3C antreibbar sein kann.

Der Pipettierautomat 2 weist vorzugsweise eine oder mehrere Pipettiereinheiten 8 auf, die jeweils mehrere Aufnahmeeinrichtungen 5 aufweisen. Die Pipettiereinheiten 8 sind vorzugsweise an vorgegebenen Positionen in dem Pipettierautomaten 2 anordenbar. Vorzugsweise sind hierzu Aufnahmen, Halter oder Positionsmarkierungen vorgesehen. Ferner können die Pipettiereinheiten 8 optional mit, insbesondere unterschiedlichen, Abstandshaltern versehen sein oder werden, um einen Abstand der Aufnahmeeinrichtungen 5 zur Pipettiervorrichtung 4 bzw. der oder den Pipettenspitzen 7 einzustellen.

Bei den Pipettiereinheiten 8 handelt es sich insbesondere um sog. Mikrotiterplatten, PCR-Platten, Deep-Well-Platten und/oder Slides. Die Aufnahmeeinrichtungen 5 sind besonders bevorzugt als Gefäße, Behältnisse, Kavitäten, Ausnehmungen o. dgl., insbesondere zur Aufnahme von Flüssigkeiten oder mit einem Volumen im Mikroliterbereich ausgebildet. Alternativ oder zusätzlich können die Aufnahmeeinrichtungen 5 jedoch auch Oberflächenabschnitte zur Ablage eines Tropfens sein, die vorzugsweise entsprechend gekennzeichnet sind oder eine Oberflächenbeschichtung bzw. -strukturierung aufweisen, die von den die jeweilige Aufnahmeeinrichtung 5 umgebenden Bereichen unterschiedlich ist.

Die Steuerungseinrichtung 1 ist mit dem Pipettierautomaten 2 vorzugsweise über eine Datenschnittstelle 9 verbunden. Auf diese Weise kann die Steuerungseinrichtung 1 mit dem Pipettierautomaten 2 kommunizieren, Sensordaten aus dem Pipettierautomaten 2 abrufen oder von dem Pipettierautomaten 2 empfangen und/oder Steuersignale, insbesondere zur Steuerung eines oder mehrerer der Aktuatoren 3A, 3B, 3C, an den Pipettierautomaten 2 übermitteln.

Die Steuerungseinrichtung 1 weist eine oder mehrere Eingabeeinrichtungen 10, insbesondere eine Tastatur 11 und/oder Computermaus 12, auf. Ferner weist die Steuerungseinrichtung 1 eine Anzeigeeinrichtung 13, insbesondere ein Display oder Touch-Display, auf. Der Sensor eines Touch-Displays kann alternativ oder zusätzlich zu der Tastatur 11 und der Computermaus 12 als Eingabeeinrichtung 10 fungieren.

Die Steuerungseinrichtung 1 weist vorzugsweise ein computerlesbares Speichermedium 14 auf, auf dem ein Programm zur Steuerung des Pipettierautomaten 2 gespeichert sein kann. Die Steuerungseinrichtung 1 kann jedoch auch, insbesondere über das Internet, mit einem Server verbunden sein, wobei ein Computerprogrammprodukt mit Programmcodemitteln, die dazu ausgebildet sind, den Pipettierautomaten 2 zu steuern, abrufbar oder in der Ferne ausführbar ist, insbesondere als sog. Client-Server-Anwendung. Ferner weist die Steuerungseinrichtung 1 vorzugsweise einen Prozessor oder Controller auf, um ein Programm zur Steuerung des Pipettierautomaten 2 auszuführen.

Die Steuerungseinrichtung 1 ist dazu ausgebildet, eine oder mehrere Konfigurationsoberflächen 15 zu erzeugen und/oder mittels der Anzeigeeinrichtung 13 darzustellen. Die Konfigurationsoberflächen 15 sind vorzugsweise dazu ausgebildet und eingerichtet, eine Steuerung des Pipettierautomaten 2 mittels der Steuerungseinrichtung 1 zu konfigurieren oder konfigurierbar zu machen. Die Steuerungseinrichtung 1 ist besonders bevorzugt dazu ausgebildet, ein oder mehrere unterschiedliche Konfigurationsoberflächen 15 zu erzeugen, worauf in den folgenden Figuren detailliert eingegangen wird.

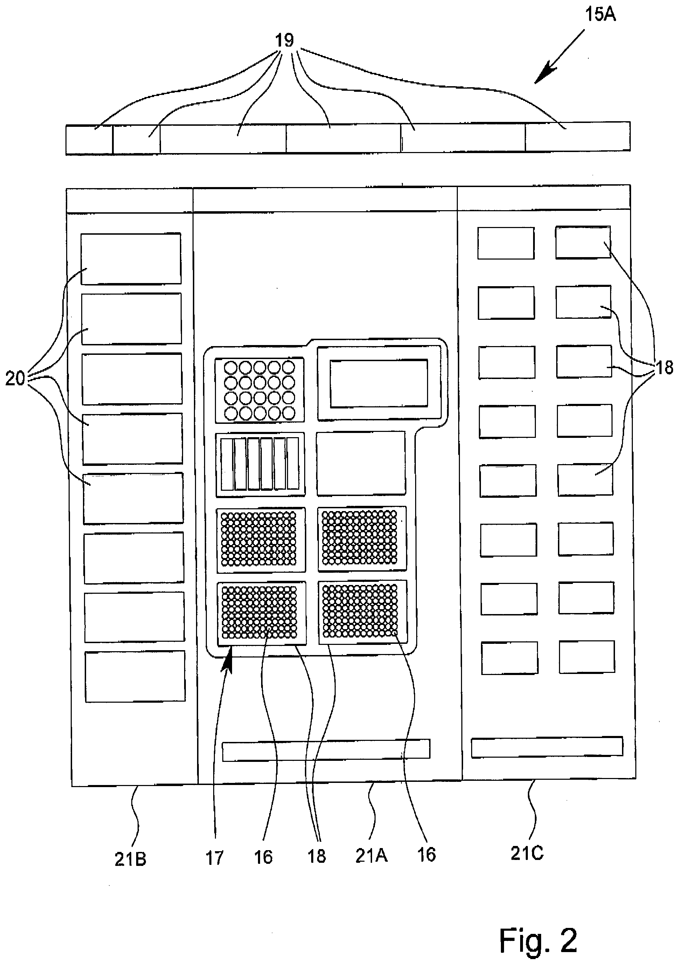

Fig. 2 zeigt in einer schematischen Darstellung eine erste Konfigurationsoberfläche 15A der vorschlagsgemäßen Steuerungseinrichtung 1. In der Konfigurationsoberfläche 15A sind mehrere graphische Aufnahmeeinrichtungs-Äquivalente 16 dargestellt.

Die Aufnahmeeinrichtungs-Äquivalente 16 korrespondieren jeweils zu Aufnahmeeinrichtungen 5, die in dem Pipettierautomaten 2 angeordnet oder anordenbar sind. Insbesondere ist vorgesehen, dass die Aufnahmeeinrichtungs-Äquivalente 16 die Anordnung der Aufnahmeeinrichtungen 5 im Pipettierautomaten 2 wiederspiegeln oder repräsentieren. Hierzu kann vorgesehen sein, dass die Aufnahmeeinrichtungs-Äquivalente 16 jeweils schematische Darstellungen der Aufnahmeeinrichtungen 5 sind oder auf sonstige Weise dazu geeignet sind, eine Aufnahmeeinrichtung 5 und, vorzugsweise, die Position der Aufnahmeeinrichtung 5 zu den sonstigen Aufnahmeeinrichtungen 5 zu repräsentieren oder zu kennzeichnen.

In der Konfigurationsoberfläche 15A ist vorzugsweise vorgesehen, dass durch Steuerung mit der Eingabeeinrichtung 10 für unterschiedliche virtuelle Positionen 17 Aufnahmeeinrichtungs-Äquivalente 16 auswählbar sind, wobei die Aufnahmeeinrichtungs-Äquivalente 16 in ihrer Position bzw. Lage und/oder Eigenschaft zu den Aufnahmeeinrichtungen 5 korrespondieren, die in dem Pipettierautomaten 2 vorgesehen sind.

Besonders bevorzugt sind korrespondierend zu Pipettiereinheiten 8 mehrere Aufnahmeeinrichtungs-Äquivalente 16, jeweils zu graphischen Pipettiereinheit-Äquivalenten 18 zusammengefasst, insbesondere in Form einer graphischen Repräsentation einer Platte, Mikrotiterplatte, PCR-Platte, Deep-Well-Platte und/oder einer Platte mit Slides. Die Pipettiereinheit-Äquivalente 18 korrespondieren vorzugsweise zu Pipettiereinheiten 8, die in dem Pipettierautomaten 2 angeordnet oder anordenbar ist/sind. Vorzugsweise sind Pipettiereinheit-Äquivalente 18 in der ersten Konfigurationsoberfläche 15A auswählbar und/oder an einer oder mehreren der virtuellen Positionen 17 anordenbar.

Es kann vorgesehen sein, dass durch Positionierung von Aufnahmeeinrichtungen 5 bzw. Pipettiereinheiten 8 in dem Pipettierautomaten 2 entsprechende Aufnahmeeinrichtungs-Äquivalente 16 bzw. Pipettiereinheit-Äquivalente 18 automatisch an den entsprechenden virtuellen Positionen 17 vorgesehen oder angeordnet werden. Hierzu kann der Pipettierautomat 2 eine oder mehrere Sensoren aufweisen und über die Datenschnittstelle 9 entsprechende Informationen übermitteln oder zum Abruf bereitstellen, so dass die Steuerungseinrichtung 1 die Konfigurations-oberfläche 15A vollautomatisch anpasst. Die Positionierung von Pipettiereinheit-Äquivalenten 18 bzw. Aufnahmeeinrichtungs-Äquivalenten 16 an virtuelle Positionen 17 der Konfigurationsoberfläche 15A kann jedoch auch manuell oder auf sonstige Weise erfolgen.

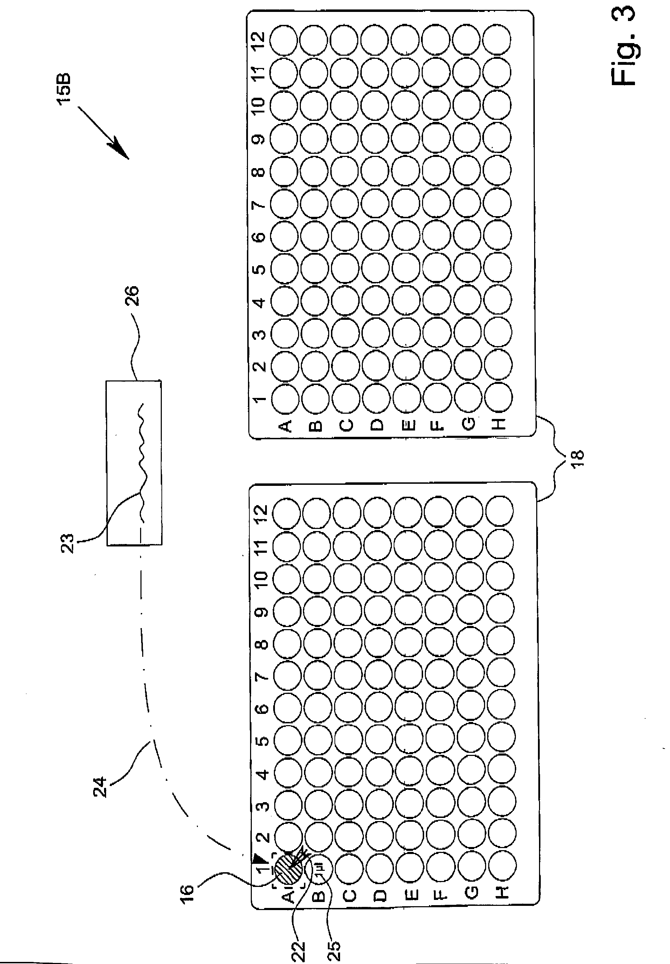

Die Konfigurationsoberfläche 15A ist vorzugsweise mit Umschaltmitteln 19 dazu ausgebildet, zwischen unterschiedlichen Funktionen umschaltbar zu sein. Insbesondere ist vorgesehen, dass die Steuerungseinrichtung 1 als Antwort auf eine Eingabe mit der Eingabeeinrichtung 10 durch Aktivierung eines der Umschaltmittel 19 die Konfigurationsoberfläche 15A derart ändert oder anpasst, dass die an den virtuellen Positionen 17 angeordneten Aufnahmeeinrichtungs-Äquivalente 16 und/oder Pipettiereinheit-Äquivalente 18 anwählbar oder auswählbar sind, um im Folgenden eine Konfiguration im Detail zu ermöglichen, auch Konfigurations- oder Einrichtungsmodus genannt. Ein solcher Konfigurations- oder Einrichtungsmodus ist zum Beispiel in Fig. 3 dargestellt.

Alternativ oder zusätzlich kann die Konfigurationsoberfläche 15A in einen Programmiermodus, einen Simulationsmodus und/oder einen Ausführungsmodus umgeschaltet werden, wobei im Programmiermodus grundsätzliche Funktionen oder verwendete Pipettiervorrichtungen 4 einstellbar sein können, im Simulationsmodus die Konfigurationsoberfläche 15A dazu ausgebildet ist, den Ablauf und/oder das Ergebnis einer Steuerung des Pipettierautomaten 2 darzustellen und/oder wobei im Ausführungs-Modus der Pipettierautomat 2 mit der Steuerungseinrichtung 1 in zuvor konfigurierter Weise gesteuert wird.

Die Konfigurationsoberfläche 15A ist vorzugsweise weiter dazu ausgebildet, über Konfigurationsanzeigen 20 vorgesehene Belegungen der virtuellen Positionen 17 und optional Zusatzinformationen hierzu anzuzeigen. Hierdurch ist in vorteilhafter Weise eine übersichtliche Konfiguration und Kontrolle möglich.

Die erste Konfigurationsoberfläche 15A weist vorzugsweise mehrere Anzeigeabschnitte 21A, 21B und 21C auf. In einem ersten Anzeigeabschnitt 21A sind vorzugsweise die Pipettiereinheit-Äquivalente 18 und/oder die Aufnahmeeinrichtungs-Äquivalente 16 vorgesehen. Der erste Anzeigeabschnitt 21A ist vorzugsweise mittig vorgesehen und/oder wird durch Betätigung der Umschaltmittel 19, die am oberen Rand vorgesehen sein können, nicht verändert.

Ein zweiter, insbesondere auf einer Seite des Anzeigeabschnitts 21A angeordneter, Anzeigeabschnitt 21B kann die Konfigurationsanzeigen 20 aufweisen. Hierbei handelt es sich um schematische Darstellungen des Anzeigeabschnitts 21A mit hervorgehobenen virtuellen Positionen 17 und/oder Beschreibungen der an der jeweils hervorgehobenen virtuellen Position 17 angeordneten Aufnahmeeinrichtungs-Äquivalente 16 bzw. Pipettiereinheit-Äquivalente 18.

Ferner kann in einem dritten Anzeigeabschnitt 21C, der insbesondere auf einer dem Anzeigeabschnitt 21B abgewandten Seite des Anzeigeabschnitts 21A vorgesehen sein kann, ein Konfigurationsmenü zur Einstellung unterschiedlicher Parameter, Funktionen und/oder zur Selektion einer oder mehrerer der Aufnahmeeinrichtungs-Äquivalente 16 bzw. Pipettiereinheit-Äquivalente 18 vorgesehen sein. Im Anzeigeabschnitt 21C sind im Einrichtungsmodus vorzugsweise unterschiedliche Pipettiereinheit-Äquivalente 18 und/oder Aufnahmeeinrichtungs-Äquivalente 16 auswählbar, wodurch diese den virtuellen Positionen 17 zugeordnet werden können.

Für die einzelnen Modi der Konfigurationsoberfläche 15A können alternativ oder zusätzlich auch separate Konfigurationsoberflächen 15A vorgesehen sein, vorzugsweise wobei in den jeweiligen Konfigurationsoberflächen 15A die Umschaltmittel 19 und/oder der Anzeigeabschnitt 21A jeweils zumindest im Wesentlichen identisch übernommen sind.

In einem Programmiermodus der ersten Konfigurationsoberfläche 15A, der über die Umschaltmittel 19 aktivierbar sein kann, können in dem zweiten Anzeigeabschnitt 21B bereits gewählte oder konfigurierte Verfahrensschritte oder Konfigurationen, insbesondere in einer chronologischen Reihenfolge, darstellbar sein. In dem dritten Anzeigeabschnitt 21C sind vorzugsweise Befehle, Verfahrensschritte oder Anweisungen auswählbar.

In einem optionalen Simulations-Modus der ersten Konfigurationsoberfläche 15A, der über die Umschaltmittel 19 aktivierbar sein kann, kann in der Konfigurationsoberfläche 15A und/oder mit dem Pipettierautomaten 2, insbesondere durch entsprechende Bewegungen der Pipettiervorrichtung 4, ein konfigurierter Ablauf simuliert werden.

In einem Ausführungs-Modus, der über die Umschaltmittel 19 aktivierbar sein kann, ist in dem zweiten Anzeigeabschnitt 21 B oder dritten Anzeigeabschnitt 21C vorzugsweise ein Bedienfeld vorgesehen, mit dem die Steuerungseinrichtung 1 derart steuerbar ist, dass der Pipettierautomat 2 in der zuvor eingerichteten bzw. konfigurierten Weise durch die Steuerungseinrichtung 1 steuerbar ist.

Anhand der Fig. 3 bis 18 werden im Folgenden unterschiedliche weitere Konfigurationsoberflächen 15B bis 15L bzw. eine Konfigurationsoberfläche 15B bis 15L in unterschiedlichen Varianten bzw. mit unterschiedlichen Bedienkonzepten näher erläutert.

Im Folgenden ist stets von unterschiedlichen Konfigurationsoberflächen 15A bis 15L die Rede, auch wenn es sich um Varianten derselben handeln kann. Die Konfigurationsoberflächen 15A bis 15L sind vorzugsweise Detailmasken oder Detaildarstellungen zur individuellen bzw. Detailsteuerung des Pipettierautomaten 2.

Vorzugsweise ist die Steuerungseinrichtung 1 dazu ausgebildet, durch Anwahl einer oder mehrerer der Aufnahmeeinrichtungs-Äquivalente 16 bzw. Pipettiereinheit-Äquivalente 18 in der Konfigurationsoberfläche 15A ein Öffnen oder Generieren einer oder mehrerer der Konfigurationsoberflächen 15B bis 15L zu ermöglichen. Insbesondere wird/werden eine oder mehrere der Aufnahmeeinrichtungs-Äquivalente 16 bzw. Pipettiereinheit-Äquivalente 18 in dem Anzeigeabschnitt 21A ausgewählt oder markiert und durch Bedienung, insbesondere Betätigung eines Soft-Schalters, der Konfigurationsoberfläche 15A wird/werden daraufhin eine oder mehrere der Konfigurationsoberflächen 15B bis 15L generiert oder angezeigt. Hier sind jedoch auch andere Lösungen möglich.

Die Varianten bzw. Konfigurationsoberflächen 15B bis 15L und die hiermit verbundene Bedienung oder Bedienbarkeit der Steuerungseinrichtung 1 bzw. des Pipettierautomaten 2 können auch separate, miteinander kombinierbare, auch unabhängig voneinander realisierbare Erfindungsaspekte darstellen oder bilden.

Ein weiterer, nicht beanspruchter Aspekt betrifft die Kombination der ersten Konfigurationsoberfläche 15A, im Folgenden auch Master-Konfigurationsoberfläche 15A genannt, mit einer oder mehreren der Konfigurationsoberflächen 15B bis 15L, im Folgenden auch Client-Konfigurationsoberflächen 15B bis 15L genannt.

Es ist bevorzugt, dass in der (Master-)Konfigurationsoberfläche 15A eine oder mehrere Aufnahmeeinrichtungs-Äquivalente 16 und/oder ein oder mehrere Pipettiereinheit-Äquivalente 18 auswählbar sind oder ausgewählt werden, die im Folgenden einer oder mehrerer der (Client-)Konfigurationsoberflächen 15B bis 15L zu Grunde liegen. Insbesondere ist die Steuerungseinrichtung 1 dazu ausgebildet, aus in der (Master-)Konfigurationsoberfläche 15A ausgewählten Aufnahmeeinrichtungs-Äquivalenten 16 bzw. Pipettiereinheit-Äquivalenten 18 (Client-)Konfigurationsoberflächen 15B bis 15L zu erzeugen.

Die (Client-)Konfigurationsoberflächen 15B bis 15L sind vorzugsweise dazu ausgebildet, durch Zuweisung von Transferparametern 23 die Flüssigkeitsaufnahme und/oder Flüssigkeitsabgabe zu konfigurieren. Die (Master-)Konfigurationsoberfläche 15A ist hingegen vorzugsweise nicht zur Konfiguration einzelner Flüssigkeitsaufnahmen und/oder Flüssigkeitsabgaben vorgesehen oder ausgebildet.

Die Client-Konfigurationsoberflächen 15B bis 15L sind vorzugsweise dazu ausgebildet, einzelnen oder Gruppen der Aufnahmeeinrichtungs-Äquivalente 16 Transferparameter 23 zuzuweisen. Durch diese Zuweisung der Transferparameter 23 zu den Aufnahmeeinrichtungs-Äquivalenten 16 in oder mittels der (Client-)Konfigurationsoberflächen 15B bis 15L sind vorzugsweise im Folgenden Konfigurationen genannte Parametersätze oder Mittel zur Übertragung, Speicherung, Anzeige und/oder Verwendung von Zuordnungen zwischen Aufnahmeeinrichtungs-Äquivalenten 16 und Transferparametern 23, insbesondere in der chronologischen Reihenfolge der jeweiligen Zuordnung, generierbar.

Die mittels der (Client-)Konfigurationsoberflächen 15B bis 15L erzeugten Konfigurationen sind vorzugsweise als oder repräsentiert durch ein Symbol oder eine sonstige graphische Repräsentation in der (Master-)Konfigurationsoberfläche 15A anzeigbar, durch weitere globale Befehle, insbesondere Pausenzeiten, Spitzenwechsel, Spritzenwechsel oder dergleichen, ergänzbar und/oder in Hinblick auf die Reihenfolge der Ausführung unterschiedlicher Konfigurationen steuerbar. Dies erfolgt bevorzugt im Programmiermodus der (Master-)Konfigurationsoberfläche 15A. Es ist bevorzugt, dass die Konfigurationen im Anzeigeabschnitt 21B und/oder als Konfigurationsanzeigen 20 angezeigt werden oder anzeigbar sind. Hier sind jedoch auch andere Lösungen möglich.

Der hierarchische Aufbau mit der (Master-)Konfigurationsoberfläche 15A und den dieser hierarchisch untergeordneten (Client-)Konfigurationsoberflächen 15B bis 15L bietet den Vorteil einer sehr übersichtlichen und strukturierten Konfigurierbarkeit und Steuerbarkeit des Pipettierautomaten 2.

Insbesondere ist die (Master-)Konfigurationsoberfläche 15A dazu ausgebildet, einzelne oder mehrere graphische Repräsentation von Konfigurationen anzuzeigen und durch Manipulationen innerhalb der (Master-)Konfigurationsoberfläche 15A, insbesondere durch so genanntes "Drag-and-Drop", in der Reihenfolge zu ändern, zu löschen und/oder zum Editieren einer oder mehrerer der Konfigurationen zu entsprechenden oder korrespondierenden (Client-)Konfigurationsoberflächen 15B bis 15L zu wechseln oder entsprechende (Client-)Konfigurationsoberflächen 15B bis 15L zu generieren und anzuzeigen, vorzugsweise alternativ zu oder anstatt der (Master-)Konfigurationsoberfläche 15A. Es ist also bevorzugt, dass entweder die (Master-)Konfigurationsoberfläche 15A oder eine der (Client-)Konfigurationsoberflächen 15B bis 15L durch die Anzeigeeinrichtung 13 anzeigbar ist, besonders bevorzugt jedoch nicht mehrere der Konfigurationsoberflächen 15A bis 15L zur gleichen Zeit.

Als Transfer wird vorzugsweise jeweils eine Folge mindestens einer Aufnahme bzw. Entnahme und einer Abgabe von Flüssigkeit 6 bzw. eine Folge der Zuordnung eines zu einem zu entnehmenden Volumen korrespondierenden Transferparameters 23 und der anschließenden Zuordnung eines zu einem abzugebenden Volumen korrespondierenden Transferparameters 23 bezeichnet. Eine Konfiguration weist vorzugsweise mindestens oder genau einen solchen Transfer auf, insbesondere beschränkt auf Transfers zwischen den oder innerhalb der zuvor in der (Master-)Konfigurationsoberfläche 15A ausgewählten Aufnahmeeinrichtungs-Äquivalenten 16 oder Pipettiereinheit-Äquivalenten 18.

Transfers sind vorzugsweise durch die (Client-)Konfigurationsoberflächen 15B bis 15L konfigurierbar, besonders bevorzugt jedoch nicht oder nicht unmittelbar durch die (Master-)Konfigurationsoberfläche 15A. In Zusammenhang mit den Figuren 3 bis 18 werden im Folgenden (Client-)Konfigurationsoberflächen 15B bis 15L vorgestellt, die vorzugsweise zur Konfiguration eines oder mehrerer Transfers ausgebildet sind oder anhand derer Transfers beschrieben werden, insbesondere durch eine chronologischen Abfolge der Schritte, die weiter unten in Zusammenhang mit der mit 1. und der mit 2. bezeichneten Seite beschrieben werden. Diese Schritte, Vorgehensweisen und dergleichen sind alternativ oder zusätzlich jedoch auch einzeln realisierbar und miteinander kombinierbar.

Fig. 3 zeigt in schematischer Darstellung eine zweite Konfigurationsoberfläche 15B der vorschlagsgemäßen Steuerungseinrichtung 1, in der exemplarisch zwei Pipettiereinheit-Äquivalente 18 mit einer Vielzahl von Aufnahmeeinrichtungs-Äquivalenten 16 vorgesehen sind. Die Aufnahmeeinrichtungs-Äquivalente 16 sind innerhalb der Pipettiereinheit-Äquivalente 18 zumindest im Wesentlichen rasterartig oder auf sonstige Weise systematisch angeordnet. Vorzugsweise sind die Aufnahmeeinrichtungs-Äquivalente 16 jeweils in Zeilen und Spalten rasterartig angeordnet, wobei die Zeilen bzw. Spalten jeweils derart gekennzeichnet sind, dass jedes einzelne der Aufnahmeeinrichtungs-Äquivalente 16 durch Angabe einer Zeile und Spalte koordinatenartig adressierbar oder identifizierbar ist.

In der Konfigurationsoberfläche 15B aus Fig. 3 sind zwei unterschiedliche oder gleiche Pipettiereinheit-Äquivalente 18 nebeneinander angeordnet. Hiervon abweichend ist es jedoch auch möglich, dass lediglich ein Pipettiereinheit-Äquivalent 18, mehr als zwei Pipettiereinheit-Äquivalente 18 oder ein oder mehrere Aufnahmeeinrichtungs-Äquivalente 16 auch unabhängig von Pipettiereinheit-Äquivalenten 18 vorgesehen sind, vorzugsweise korrespondierend zur Belegung einer oder mehrerer virtueller Positionen 17.

Es ist insbesondere möglich, dass ein bestimmtes Pipettiereinheit-Äquivalent 18 zwei- oder mehrmals in der Konfigurationsoberfläche 15B vorgesehen ist, insbesondere nebeneinander, um in übersichtlicher Weise Transfers zwischen Aufnahmeeinrichtungs-Äquivalenten 16 desselben Pipettiereinheit-Äquivalents 18 zu konfigurieren.

In der Konfigurationsoberfläche 15B sind mehrere Aufnahmeeinrichtungs-Äquivalente 16 auswählbar, insbesondere mit einem Auswahlwerkzeug 22, beispielsweise einem Cursor.

Durch Auswahl der graphischen Aufnahmeeinrichtungs-Äquivalente 16 kann diesen vorzugsweise mindestens ein Transferparameter 23 zugeordnet werden, in Fig. 3 mit dem Pfeil 24 angedeutet. Der Pfeil 24 dient lediglich der Erläuterung und ist kein Bestandteil der Konfigurationsoberfläche 15B.

Die Steuerungseinrichtung 1 kann eine Datenbank aufweisen, in der zu den unterschiedlichen Aufnahmeeinrichtungs-Äquivalenten 16 ein zugehöriger Transferparameter 23 abgelegt oder abgespeichert werden kann, insbesondere durch die Auswahl bzw. Zuordnung. Bei der Datenbank kann es sich um eine Tabelle oder um eine sonstige Datenstruktur handeln.

Vorzugsweise ist jedem Aufnahmeeinrichtungs-Äquivalent 16 alternativ oder zusätzlich ein Ist-Volumen-Parameter 25 repräsentierend ein Flüssigkeitsvolumen, das in der jeweiligen Aufnahmeeinrichtung 5, die zu dem jeweiligen Anzeigeeinrichtungs-Äquivalent 16 korrespondiert, bereits enthalten ist und/oder nach Durchführung eines oder mehrerer Pipettierschritts/e bzw. Transfers im Ergebnis vorhanden sein soll. Der Ist-Volumen-Parameter 25 kann in der Konfigurationsoberfläche 15B dem jeweiligen Aufnahmeeinrichtungs-Äquivalent 16 zugeordnet, insbesondere im Zusammenhang hiermit oder innerhalb des jeweiligen graphischen Aufnahmeeinrichtungs-Äquivalents 16 dargestellt oder darstellbar sein.

Der Transferparameter 23 korrespondiert zu einem Transfervolumen, also zu einem Volumen der Flüssigkeit 6, das aus dem jeweiligen Aufnahmeeinrichtungs-Äquivalent 16 entnommen oder hierin abgegeben werden soll.

Die Steuerungseinrichtung 1 ist vorzugsweise dazu ausgebildet, zu den Transferparametern 23, insbesondere unter Berücksichtigung oder in der Reihenfolge ihrer Vergabe, korrespondierende Steuerbefehle zur Steuerung des Pipettierautomaten 2 zu erzeugen und, vorzugsweise, über die Datenschnittstelle 9 an den Pipettierautomaten 2 zu übermitteln. Hierdurch bewirkt die Steuerungseinrichtung 1 eine Steuerung des Pipettierautomaten 2 derart, dass die Aufnahme des Transfervolumens aus oder die Abgabe des Transfervolumens in die jeweilige Aufnahmeeinrichtung 5 bewirkt wird. Dies erfolgt insbesondere durch Ansteuerung eines oder mehrerer der Aktuatoren 3A, 3B, 3C des Pipettierautomaten 2.

Gemäß einem, nicht beanspruchten Aspekt ist vorgesehen, dass die Steuerungseinrichtung 1 bzw. die Konfigurationsoberfläche 15B dazu ausgebildet ist, dass in oder mit der Konfigurationsoberfläche 15B der Transferparameter 23 einstellbar oder vorgebbar ist. Insbesondere weist die Konfigurationsoberfläche 15B eine Eingabemaske 26 oder ein Menü, ein Auswahlfeld o. dgl. auf, in die der Transferparameter 23, insbesondere mittels der Tastatur 11, eingegeben, ausgewählt, geändert oder auf sonstige Weise vorgegeben werden kann.

Der Transferparameter 23 ist vorzugsweise auf derselben Konfigurationsoberfläche 15B einstellbar, auf der auch einzelne Aufnahmeeinrichtungs-Äquivalente 16 auswählbar sind und der Transferparameter 23 diesen zuordenbar ist. Dies hat sich als besonders vorteilhaft für eine schnelle Konfiguration und übersichtliche Bedienung des Pipettierautomaten 2 mit der Steuerungseinrichtung 1 herausgestellt.

Der Transferparameter 23 korrespondiert zu dem Transfervolumen, also einem Flüssigkeitsvolumen der Flüssigkeit 6, die durch die Pipettiervorrichtung 4 mit der oder den Pipettenspitzen 7 aufgenommen oder hierdurch abgegeben werden soll.

Der Transferparameter korrespondiert jeweils zu einem Transfervolumen, das aus der Transferstoffmenge, der Transfer- oder Zielkonzentration bestimmbar oder berechenbar sein kann.

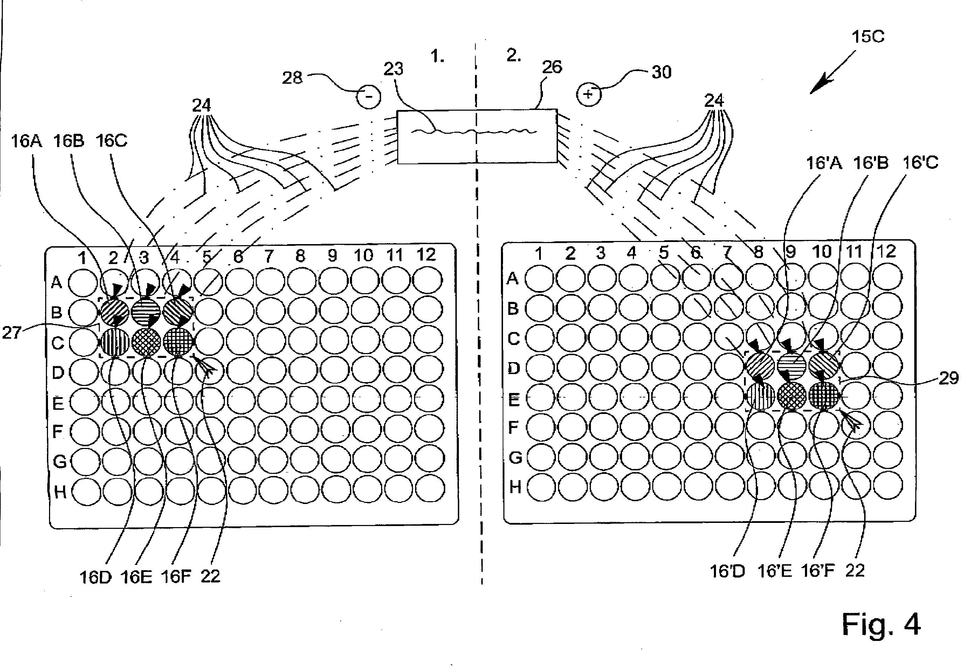

In Fig. 4 ist eine schematische Darstellung einer dritten Konfigurationsoberfläche 15C der vorschlagsgemäßen Steuerungseinrichtung 1 abgebildet.

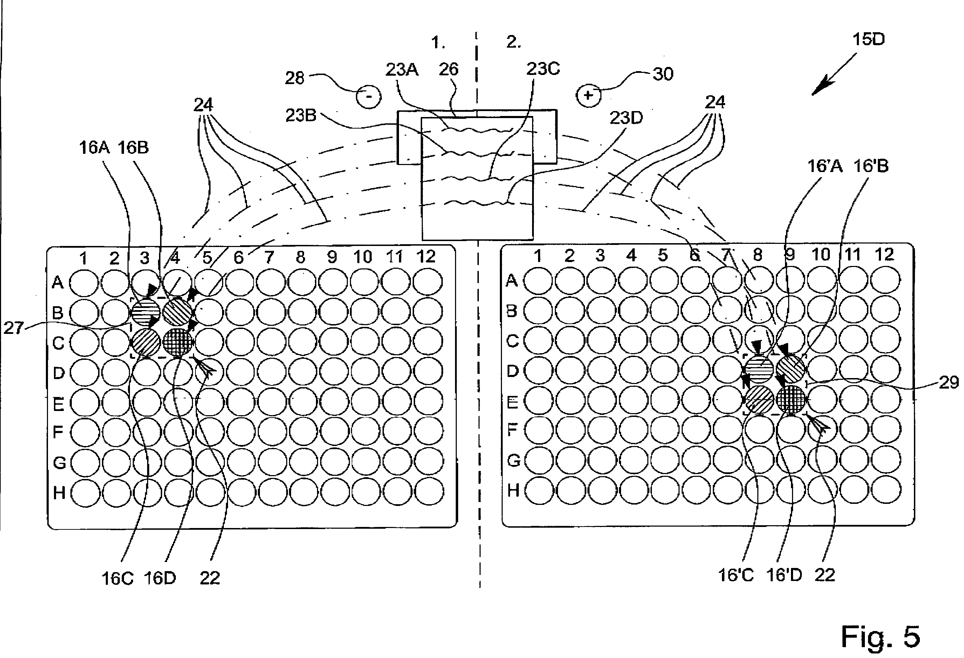

Für grundlegende Aspekte, insbesondere betreffend die Zuordnung des Transferparameters 23, wird an dieser Stelle explizit auf die Erläuterungen im Zusammenhang mit der Fig. 3 verwiesen. Im Folgenden wird daher lediglich auf weitere Besonderheiten komplexerer Steuerungsprozeduren eingegangen, vorzugsweise wobei die im Zusammenhang mit Fig. 3 beschriebenen Eigenschaften und Merkmale zugrunde liegen oder entsprechend anwendbar sind. Entsprechendes gilt für die weiteren Konfigurationsoberflächen 15D bis 15L, die in Zusammenhang mit Fig. 5 bis 18 erläutert werden.

Die Konfigurationsoberfläche 15C aus Fig. 4 ist aus Gründen des besseren Verständnisses mit einer gestrichelten Linie in einen ersten und einen zweiten Abschnitt unterteilt, wobei diese gestrichelte Linie sowie die Zahlen 1. und 2. nicht zu der Konfigurationsoberfläche 15C zählen, sondern lediglich eine bevorzugte zeitliche Abfolge darstellen sollen. In entsprechender Weise sind die Pfeile 24 ebenfalls lediglich zur Erläuterung dargestellt, werden vorzugsweise jedoch nicht in der jeweiligen Konfigurationsoberfläche 15 abgebildet oder sind Teil dieser.

In der Konfigurationsoberfläche 15C ist ein Aufnahmeeinrichtungs-Äquivalent 16 oder eine, hier gestrichelt hervorgehobene, erste Gruppe 27 von Aufnahmeeinrichtungs-Äquivalenten 16A bis 16F auf der 1. Seite ausgewählt. Durch Auswahl der Aufnahmeeinrichtungs-Äquivalente 16A bis 16F werden diesen Aufnahmeeinrichtungs-Äquivalenten 16A bis 16F vorzugsweise der oder die Transferparameter 23 zugeordnet, wie mit den Pfeilen 24 angedeutet.

Der jeweilige Transferparameter 23, der in diesem ersten Schritt jeweils zugeordnet wird, ist ein Transferparameter 23, der zu einem oder mehreren zu entnehmenden Transfervolumina korrespondiert, was in der Konfigurationsoberfläche 15C mit dem Minus-Symbol 28 angedeutet ist, was lediglich zu Erläuterungszwecken dient und bevorzugt nicht zu der Konfigurationsoberfläche 15C gehört oder mittels der Steuerungseinrichtung 1 anzeigbar ist.

Nach Auswahl eines ersten Aufnahmeeinrichtungs-Äquivalents 16A bis 16F oder mehrerer erster Aufnahmeeinrichtungs-Äquivalente 16A bis 16F als eine erste Gruppe 27 auf der 1. Seite kann im Folgenden eine zweite Auswahl eines zweiten Aufnahmeeinrichtungs-Äquivalents 16'A bis 16'F oder eine Auswahl einer zweiten Gruppe 29 zweiter Aufnahmeeinrichtungs-Äquivalente 16'A bis 16'F auf der 2. Seite erfolgen. Durch diese Auswahl werden zu einem oder mehreren abzugebenden Transfervolumina korrespondierende Transferparameter 23 den jeweiligen zweiten Aufnahmeeinrichtungs-Äquivalenten 16'A bis 16'F zugeordnet. In der Konfigurationsoberfläche 15C wird diese zeitliche Folge durch die mittige Strichlinie und die Bezeichnung mit 1. und 2. symbolisiert.

Es ist bevorzugt, dass bei einer auf der 1. Seite erfolgenden ersten Auswahl eines ersten Aufnahmeeinrichtungs-Äquivalents 16A bis 16F oder einer ersten Gruppe 27 erster Aufnahmeeinrichtungs-Äquivalente 16A bis 16F jedem ausgewählten ersten Aufnahmeeinrichtungs-Äquivalent 16A bis 16F automatisch ein zu einem zu entnehmenden Transfervolumen korrespondierender Transferparameter 23 zugeordnet wird. Folgt auf diese erste Auswahl eine auf der 2. Seite erfolgende zweite Auswahl eines zweiten Aufnahmeeinrichtungs-Äquivalents 16'A bis 16'F oder einer Gruppe 29 zweiter Aufnahmereinrichtungs-Äquivalente 16'A bis 16'F, ist es bevorzugt, wenn jedem ausgewählten zweiten Aufnahmeeinrichtungs-Äquivalent 16'A bis 16'F automatisch ein zu einem abzugebenden Transfervolumen korrespondierender Transferparameter 23 zugeordnet wird.

Die ersten Aufnahmeeinrichtungs-Äquivalente 16A bis 16F, denen ein Transferparameter 23 zugeordnet wird, der zu einem zu entnehmenden Transfervolumen korrespondiert wie auch mit dem Minus-Symbol 28 angedeutet, werden auch Quell-Aufnahmeeinrichtungs-Äquivalente genannt. Zweite Aufnahmeeinrichtungs-Äquivalente 16'A bis 16'F, denen ein Transferparameter 23 zugeordnet wird, der zu einem abzugebenden Transfervolumen korrespondiert, werden auch als Ziel-Aufnahmeeinrichtungs-Äquivalente bezeichnet. Eine Auswahl von Aufnahmeeinrichtungs-Äquivalenten 16 auf der 1. Seite führt also vorzugsweise automatisch zur Definition von Quell-Aufnahmeeinrichtungs-Äquivalenten 16A bis 16F. während eine Auswahl von Aufnahmeeinrichtungs-Äquivalenten 16 auf der 2. Seite zur Definition von Ziel-Aufnahmeeinrichtungs-Äquivalenten 16'A bis 16'F führt.

Bei Auswahl einer Gruppe 27 erster Aufnahmeeinrichtungs-Äquivalente 16A bis 16F auf der 1. Seite und der folgenden Auswahl einer Gruppe 29 zweiter Aufnahmeeinrichtungs-Äquivalente 16'A bis 16'F auf der 2. Seite erfolgt vorzugsweise automatisch eine paarige 1:1 Zuordnung. Bei Nutzung einer Mehrkanal-Pipettiervorrichtung 4 korrespondierend zu den Gruppen 27, 29 wird diese 1:1 Zuordnung automatisch durch separate Pipettenspitzen 7 erreicht bzw. ermöglicht. Bei Auswahl von Gruppen 27, 29, die nicht zu einer Mehrkanal-Pipettiervorrichtung 4 korrespondieren, werden nach Auswahl der Gruppen 27 und 29 Zuordnungen bzw. Transfervorgänge automatisch aufgespalten, so dass durch die Steuerung Einzeltransfers erfolgen oder einzelne, jeweils zwischen der Gruppe 27 erster Aufnahmeeinrichtungs-Äquivalente 16A bis 16F und der Gruppe 29 zweiter Aufnahmeeinrichtungs-Äquivalente 16'A bis 16'F wechselnde Auswahlen fingiert werden oder auf sonstige Weise erreicht wird, dass jeweils eine paarige Zuordnung erfolgt.

Im Darstellungsbeispiel ist die Steuerungseinrichtung 1 dazu ausgebildet und eingerichtet, in Abhängigkeit von der Anzahl der Pipettenspitzen 7 der jeweils gewählten Pipettiervorrichtung 4 den Pipettierautomaten 2 nach Auswahl zweier Gruppen 27, 29 derart zu steuern, dass das in aufeinanderfolgenden Vorgängen Flüssigkeit 6 nach und nach aus den zu den ersten Aufnahmeeinrichtungs-Äquivalenten 16A bis 16F korrespondierenden Aufnahmeeinrichtungen 5 Flüssigkeit 6 jeweils in die zu den zweiten Aufnahmeeinrichtungs-Äquivalenten 16'A bis 16'F korrespondierenden Aufnahmeeinrichtungen 5 transferiert wird.

In der Konfigurationsoberfläche 15C sind einander zugeordnete oder zueinander korrespondierende Aufnahmeeinrichtungs-Äquivalente 16 vorzugsweise zueinander zugehörig oder identisch gekennzeichnet. Im Darstellungsbeispiel weisen zueinander zugehörige oder korrespondierende Aufnahmeeinrichtungs-Äquivalente 16 dieselbe Schraffur auf. Alternativ oder zusätzlich können jedoch auch selbe oder gleiche Farben oder sonstige Markierungen verwendet werden.

Fig. 5 zeigt eine schematische Darstellung einer vierten Konfigurationsoberfläche 15D, bei der oder in der vorzugsweise eine oder mehrere Volumendifferenz/en oder mehrere Volumina als Transferparameter 23 oder zur Ermittlung des jeweiligen Transferparameters 23 vorgebbar ist/sind.

Vorzugsweise kann eine Volumendifferenz oder ein zu einer Volumendifferenz korrespondierender Transferparameter 23 angegeben, bestimmt oder gewählt werden, insbesondere in einer Eingabemaske 26. Durch Auswahl mehrerer Aufnahmeeinrichtungs-Äquivalente 16A bis 16D oder einer Gruppe 27 auf der 1. Seite wird der jeweils zugeordnete oder zuzuordnende Transferparameter 23 von einem nächsten Aufnahmeeinrichtungs-Äquivalent 16 der Gruppe 27 vorzugsweise automatisch korrespondierend zu einem Transfervolumen gewählt, das um die Volumendifferenz von einem Transfervolumen abweicht, zu dem der Transferparameter 23 korrespondiert, der zuvor einem Aufnahmeeinrichtungs-Äquivalent 16 zugeordnet worden ist. Im Darstellungsbeispiel sind mehrere Volumendifferenzen oder Volumina als Transferparameter 23A bis 23D vorgegeben. Vorzugsweise ist die Steuerungseinrichtung 1 bzw. die Konfigurationsoberfläche 15D so ausgebildet und eingerichtet, dass bei Auswahl einer Gruppe 27 von Aufnahmeeinrichtungs-Äquivalenten 16A bis 16D jeweils die Transferparameter 23A bis 23D zugeordnet werden. Die Transferparameter 23A bis 23D können als Absolutwerte, insbesondere in Form einer Liste oder dergleichen, oder als Volumendifferenzen angebbar sein oder angegeben werden. Wenn Volumendifferenzen vorgegeben oder angegeben sind, wird automatisch dem auf ein vorheriges Aufnahmeeinrichtungs-Äquivalent 16A bis 16D folgendes Aufnahmeeinrichtungs-Äquivalent 16A bis 16D ein Transferparameter 23A bis 23D zugeordnet, der zu einem Transfervolumen korrespondiert, das um die jeweilige Volumendifferenz im Vergleich zum Transfervolumen abweicht, zu dem ein Transferparameter 23 des vorherigen Aufnahmeeinrichtungs-Äquivalents 16A bis 16D, korrespondiert.

Im Darstellungsbeispiel gemäß Fig. 5 wird einem ersten Aufnahmeeinrichtungs-Äquivalent 16A ein erster Transferparameter 23A zugeordnet, der zu einem vorgegebenen Transfervolumen und/oder dem Wert der Volumendifferenz korrespondiert. Einem zweiten Aufnahmeeinrichtungs-Äquivalent 16B wird anschließend ein zweiter Transferparameter 23B zugeordnet, der zu einem anderen absoluten Transfervolumen korrespondiert oder zu einem Transfervolumen korrespondiert, das um eine angegebene Volumendifferenz abweicht, bevorzugt größer ist, als das Transfervolumen, zu dem der Transferparameter 23A des Aufnahmeeinrichtungs-Äquivalents 16A korrespondiert.

Bei der Angabe von Volumendifferenzen ist es möglich, einen Startwert anzugeben, der dem ersten Aufnahmeeinrichtungs-Äquivalent 16A einer Gruppe 27 zugeordnet wird und eine Volumendifferenz anzugeben, wobei der zweite zugeordnete Transferparameter 23B zu einem Transfervolumen korrespondiert, das um die Volumendifferenz von dem Startwert abweicht und wobei mit jeder weiteren Zuordnung eines weiteren Transferparameters 23C, 23D der weitere Transferparameter 23C, 23D jeweils zu einem Transfervolumen korrespondiert, das (jeweils nochmals) um die angegebene Volumendifferenz geändert ist.

Vorzugsweise werden Transferparameter 23, korrespondierend zu Transfervolumina, die voneinander um Volumendifferenzen abweichen oder angegebenen Volumina entsprechend von oben links beginnend von links nach rechts und zeilenweise von oben nach unten zugeordnet. Hier sind jedoch auch andere Lösungen möglich.

Wie bereits in Zusammenhang mit Fig. 4 erläutert, werden bei Auswahl eines zweiten Aufnahmeeinrichtungs-Äquivalents 16'A bis 16'D auf der 2. Seite Transferparameter 23A bis 23D in entsprechender Weise zugeordnet. Vorzugsweise erfolgt eine 1:1 Zuordnung der Aufnahmeeinrichtungs-Äquivalente 16A bis 16D zu den Aufnahmeeinrichtungs-Äquivalenten 16'A bis 16'D, wobei zur Steuerung des Pipettierautomaten 2 eine Aufteilung in einzelne Transfervorgänge erfolgen kann, wie beispielhaft in Zusammenhang mit Fig. 4 erläutert.

Die Volumendifferenzen, der Startwert und die Volumendifferenz und/oder die Volumina können als Transferparameter 23A bis 23D oder zur Bildung von Transferparametern 23 in eine Liste, Tabelle oder eine insbesondere selbst erweiternde Eingabemaske 26 oder ein Kontextmenü eingetragen werden oder eintragbar sein.

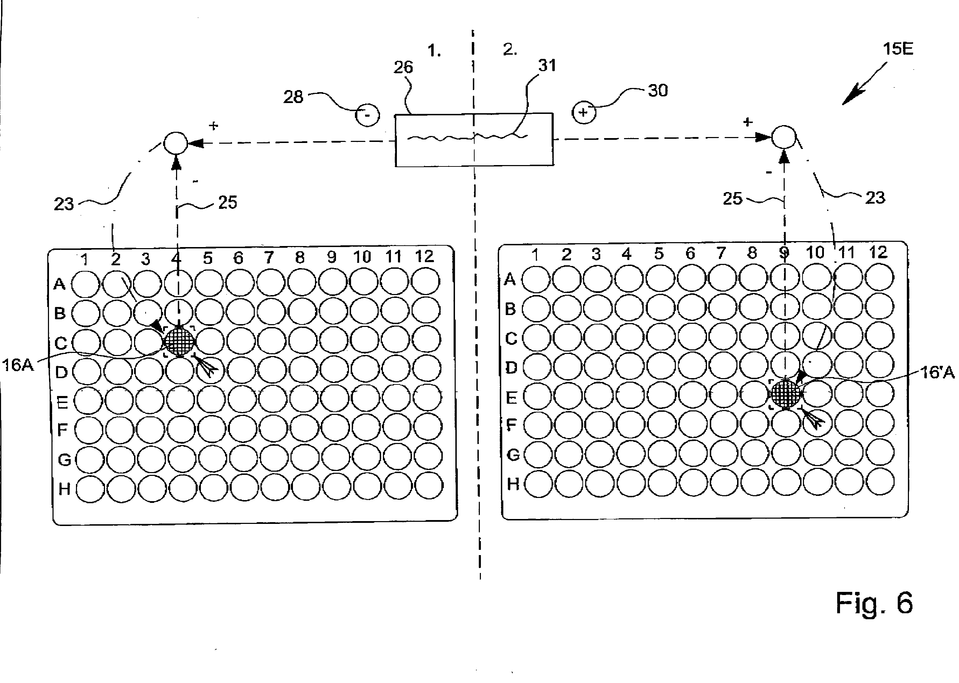

Fig. 6 zeigt in einer schematischen Darstellung eine fünfte Konfigurationsoberfläche 15E. Vorzugsweise ist ein Zielvolumen 31 auf oder in die Konfigurationsoberfläche 15E, insbesondere in eine Eingabemaske 26, eingebbar. Die Steuerungseinrichtung 1 ist vorzugsweise dazu ausgebildet, durch Auswahl eines Aufnahmeeinrichtungs-Äquivalents 16A diesem einen Transferparameter zuzuordnen, der zu einem Transfervolumen korrespondiert, das zu einer Differenz zwischen dem Zielvolumen 31 und einem dem Aufnahmeeinrichtungs-Äquivalent 16A oder einem anderen Aufnahmeeinrichtungs-Äquivalent 16, 16' bereits zugeordneten Ist-Volumen entspricht.

Das Ist-Volumen wird vorzugsweise durch den Ist-Volumen-Parameter 25 repräsentiert. Insbesondere wird bei Auswahl eines Aufnahmeeinrichtungs-Äquivalents 16A von einem zu dem Zielvolumen 31 korrespondierenden Parameter der Ist-Volumen-Parameter 25 dieses oder eines anderen Aufnahmeeinrichtungs-Äquivalents 16, 16' subtrahiert und ein zu dem Ergebnis korrespondierender Transferparameter 23 dem Aufnahmeeinrichtungs-Äquivalent 16A zugeordnet. Hierdurch wird erreicht, dass die zu dem Aufnahmeeinrichtungs-Äquivalent 16A korrespondierende Aufnahmeeinrichtung 5 bei Steuerung des Pipettierautomaten 2 mit der Steuerungseinrichtung 1 auf das Zielvolumen 31 aufgefüllt oder geleert wird oder auffüllbar oder entleerbar ist.

Das Zielvolumen 31 kann sich also auf ein Quell-Aufnahmeeinrichtungs-Äquivalent 16 oder auf ein Ziel-Aufnahmeeinrichtungs-Äquivalent 16' beziehen. Im ersten Fall wird der zum Quell-Aufnahmeeinrichtungs-Äquivalent 16 korrespondierenden Aufnahmeeinheit 5 entsprechend viel Flüssigkeit 6 entnommen. Im zweiten Fall wird der zum Ziel-Aufnahmeeinrichtungs-Äquivalent 16' korrespondierenden Aufnahmeeinheit 5 entsprechend viel Flüssigkeit 6 hinzugefügt.

In Fig. 6 sind entsprechende Vorgänge mit Pfeilen dargestellt, die vorzugsweise nicht Teil der Konfigurationsoberfläche 15E sind und lediglich der Erläuterung dienen. Wie zuvor ist auch in Fig. 6 die Konfigurationsoberfläche 15E durch eine lediglich der Erläuterung dienenden Strichellinie zweigeteilt, und zwar in einen mit 1. bezeichneten und einen mit 2. bezeichneten Abschnitt, was vorzugsweise zu einer chronologischen Abfolge von Auswahlen korrespondiert. Auf der Seite, die mit 1. bezeichnet ist, wird also eine erste Auswahl des Aufnahmeeinrichtungs-Äquivalents 16A erläutert und im Folgenden wird anhand der mit 2. bezeichneten Seite eine zweite Auswahl eines anderen Aufnahmeeinrichtungs-Äquivalents 16'A erläutert.

Bei dem Aufnahmeeinrichtungs-Äquivalent 16'A handelt es sich vorzugsweise um ein Ziel-Aufnahmeeinrichtungs-Äquivalent. Wie bereits in Zusammenhang mit dem Aufnahmeeinrichtungs-Äquivalent 16A, das vorzugsweise ein Quell-Aufnahmeeinrichtungs-Äquivalent ist, beschrieben worden ist, kann der Transferparameter 23 bzw. das hierzu korrespondierende Transfervolumen in entsprechender Weise bestimmt oder berechnet werden, vorzugsweise durch die Steuerungseinrichtung 1.

Es ist nicht zwingend notwendig, dass auf beiden Seiten bzw. sowohl auf Seiten des Quell-Aufnahmeeinrichtungs-Äquivalents 16A als auch auf der Seite des Ziel-Aufnahmeeinrichtungs-Äquivalents 16'A der Transferparameter 23 jeweils derart bestimmt und zugeordnet wird, dass das Zielvolumen 31 erreichbar ist. Beispielsweise kann quellseitig das komplette zur Verfügung stehende Volumen der jeweiligen Pipettenspitze 7 ausgereizt werden und es kann oder können ein oder mehrere Aufnahmeeinrichtungs-Äquivalente 16 in der beschriebenen Weise auf das Zielvolumen 31 gebracht werden. Alternativ oder zusätzlich kann oder können Transferparameter 23 für Quell-Aufnahmeeinrichtungs-Äquivalente 16A, insbesondere auch unabhängig vom jeweiligen Ziel-Aufnahmeeinrichtungs-Äquivalent 16'A, derart bestimmt werden, dass bei Steuerung des Pipettierautomaten soviel Flüssigkeit 6 entnommen wird, dass das Zielvolumen 31 erreicht wird oder erreichbar ist. Diese Aspekte sind jedoch auch miteinander kombinierbar, wie in Fig. 6 dargestellt.

Ferner ist es möglich, dass eine oder mehrere Gruppen 27, 29 von Aufnahmeeinrichtungs-Äquivalenten 16, 16' ausgewählt werden und jeweils zu dem einzelnen Aufnahmeeinrichtungs-Äquivalent 16A, 16'A in entsprechender Weise ein Transferparameter 23 bestimmt und jeweils dem Aufnahmeeinrichtungs-Äquivalent 16A, 16' zugeordnet werden, insbesondere mit einer paarweisen 1:1 Zuordnung. Ferner ist es möglich, dass in entsprechender Weise, wie in Zusammenhang mit Fig. 5 bzw. Konfigurationsoberfläche 15B beschrieben worden ist, mehrere Zielvolumina 31 angegeben werden und diese unterschiedlichen Zielvolumina 31 bzw. jeweils mittels der Volumendifferenz geänderte Zielvolumina 31 der Bestimmung der jeweiligen Transferparameter 23 zugrunde gelegt werden.

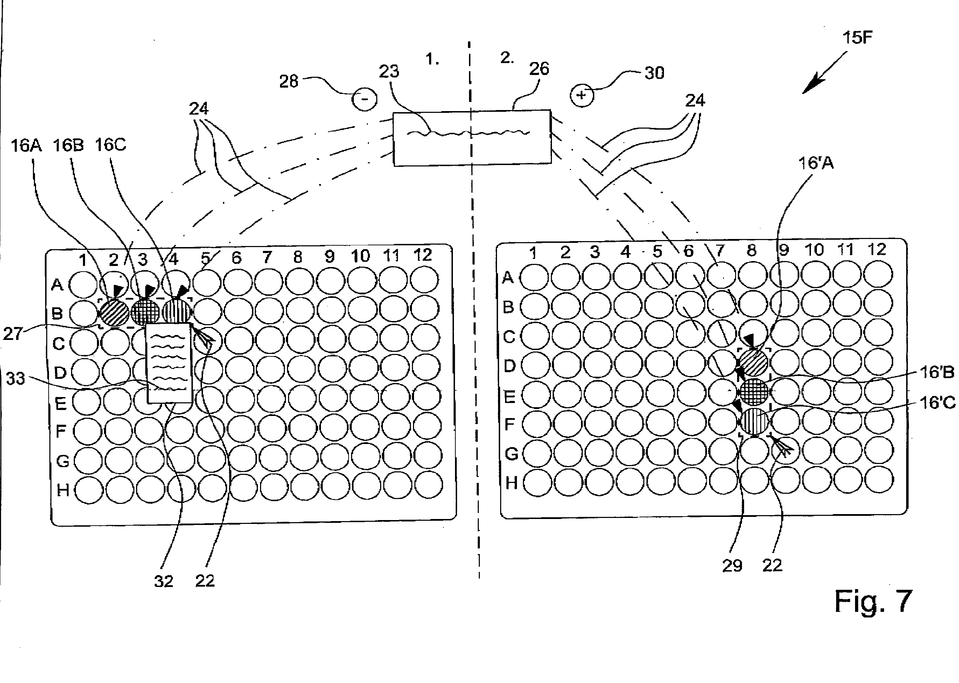

Fig. 7 zeigt in einer schematischen Darstellung eine sechste Konfigurationsoberfläche 15F der vorschlagsgemäßen Steuerungseinrichtung 1.

In der vorliegenden Konfigurationsoberfläche 15F sind vorzugsweise als eine erste Gruppe 27 mehrere Aufnahmeeinrichtungs-Äquivalente 16A bis 16C auf der 1. Seite nacheinander oder gleichzeitig als Quell-Aufnahmeeinrichtungs-Äquivalente 16 auswählbar, wobei vorzugsweise entsprechend der in Zusammenhang mit Fig. 3 bis 18 beschriebenen Weise Transferparameter 23 zugeordnet werden können.

Vorzugsweise ist ein Kontextmenü 32 in der Konfigurationsoberfläche 15F generierbar oder aktivierbar, insbesondere durch Auswahl oder Alternativ-Auswahl der ersten Gruppe 27 bzw. der Quell-Aufnahmeeinrichtungs-Äquivalente 16A bis 16C. Das Kontextmenü 32 weist vorzugsweise eine oder mehrere Optionen 33 zur virtuellen Modifikation der Struktur bzw. Anordnung und/oder Anzahl der ausgewählten Quell-Aufnahmeeinrichtungs-Äquivalente 16A bis 16C der Gruppe 27 für eine folgende oder weitere Auswahl von Ziel-Aufnahmeeinrichtungen 16'A bis 16'C auf. Die Modifikation ist insofern virtuell, als nicht die ausgewählten Quell-Aufnahmeeinrichtungs-Äquivalente 16A bis 16C selbst modifiziert sondern ein Transfermuster (also eine graphische Repräsentation) erzeugt und dieses modifiziert wird.

Durch Auswahl der Quell-Aufnahmeeinrichtungs-Äquivalente 16A bis 16C wird eine graphische Repräsentation bzw. Markierung der ausgewählten Quell-Aufnahmeeinrichtungs-Äquivalente 16A bis 16C dargestellt. Die graphische Repräsentation bzw. Markierung kann dann mittels der Optionen 33 des Kontextmenüs 32 hinsichtlich Anzahl und Anordnung der Aufnahmeeinrichtungs-Äquivalente verändert werden. Schließlich können anhand der graphischen Repräsentation bzw. Markierung gleichzeitig (also synchron) mehrere Ziel-Aufnahmeeinrichtungs-Äquivalente 16'A bis 16'C als eine zweite Gruppe 29 auf der 2. Seite ausgewählt werden. Durch die Auswahl werden die ausgewählten Quell-Aufnahmeeinrichtungs-Äquivalente 16A bis 16C gleichzeitig den Ziel-Aufnahmeeinrichtungs-Äquivalenten 16'A bis 16'C zugeordnet.

Somit sind die ausgewählten Quell-Aufnahmeeinrichtungs-Äquivalente 16A bis 16C gleichzeitig (alle auf einmal) mehreren Ziel-Aufnahmeeinrichtungs-Äquivalenten 16'A bis 16'C derart zuordenbar, dass sich die Anordnung und/oder Anzahl der zugeordneten Ziel-Aufnahmeeinrichtungs-Äquivalente 16'A bis 16'C von der Anordnung und/oder Anzahl der ausgewählten Quell-Aufnahmeeinrichtungs-Äquivalente 16A bis 16C unterscheidet. Dadurch werden den ausgewählten Quell-Aufnahmeeinrichtungs-Äquivalenten 16A bis 16C und den ihnen zugeordneten Ziel-Aufnahmeeinrichtungs-Äquivalenten 16'A bis 16'C Transferparameter 23 derart zugeordnet, dass jeweils das korrespondierende Transfervolumen aus den zu den ausgewählten Quell-Aufnahmeeinrichtungs-Äquivalenten 16'A bis 16'C korrespondierenden Aufnahmeeinrichtungen 5 in die zu den zugeordneten Ziel-Aufnahmeeinrichtungs-Äquivalenten 16'A bis 16'C korrespondierenden Aufnahmeeinrichtungen 5 transferierbar ist.

Wie in Fig. 7 ersichtlich sind die zugeordneten Ziel-Aufnahmeeinrichtungs-Äquivalente 16'A bis 16'C in derselben Konfigurationsoberfläche 15F wie die ausgewählten Quell-Aufnahmeeinrichtungs-Äquivalente 16A bis 16C darstellbar.

Mit dem Kontextmenü 32 oder auch auf andere, vorzugsweise in der Konfigurationsoberfläche 15F vorgesehene Weise kann als Option 33 vorzugsweise auswählbar sein oder ausgewählt werden, dass die Anordnung der Ziel-Aufnahmeeinrichtungs-Äquivalente 16'A bis 16'C einer Spiegelung, Drehung, zeilenweisen oder spaltenweisen Vertauschung und/oder zeilenweisen oder spaltenweisen Verschiebung der Anordnung der ausgewählten Quell-Aufnahmeeinrichtungs-Äquivalente 16A bis 16C entspricht. Insbesondere wird nach Auswahl der Gruppe 27 und der Option 33 eine in der Anordnung geänderte Markierung der Quell-Aufnahmeeinrichtungs-Äquivalente 16A bis 16C angezeigt, durch die eine zweite Gruppe 29 von Ziel-Aufnahmeeinrichtungs-Äquivalenten 16'A bis 16'C auswählbar ist.

Im Darstellungsbeispiel ist eine zu der ersten Gruppe 27 korrespondierende, in der Anordnung geänderte Markierung im Bereich des Auswahlwerkzeugs 22 hervorgehoben und kann durch Aktivieren des Auswahlwerkzeugs 22 mittels der Eingabeeinrichtung 10 einer entsprechenden Gruppe 29 von Ziel-Aufnahmeeinrichtungs-Äquivalenten 16'A bis 16'C zugeordnet werden. Hierdurch werden vorzugsweise, wie mit Pfeilen 24 angedeutet, entsprechende Transferparameter 23 den Ziel-Aufnahmeeinrichtungs-Äquivalenten 16'A bis 16'C zugeordnet.

Die Steuerungseinrichtung 1 ist vorzugsweise dazu ausgebildet, den Pipettierautomaten 2 derart zu steuern, dass entweder mit einer Mehrkanal-Pipettiervorrichtung 4 oder zerlegt in mehrere Transfervorgänge mit einer Einkanal-Pipettiervorrichtung 4 ein 1:1 Volumentransfer zwischen den einzelnen Aufnahmeeinrichtungen 5 erfolgt, die einerseits zu der Gruppe 27 bzw. den Quell-Aufnahmeeinrichtungs-Äquivalenten 16A bis 16C und andererseits zu der Gruppe 29 bzw. den Ziel-Aufnahmeeinrichtungs-Äquivalenten 16'A bis 16'C korrespondieren. Es wird also insbesondere Flüssigkeit 6 von der Aufnahmeeinrichtung 5, die zu dem Quell-Aufnahmeeinrichtungs-Äquivalent 16A korrespondiert, aufgenommen und nach entsprechender Bewegung der Pipettiervorrichtung 4 in die zu dem Ziel-Aufnahmeeinrichtungs-Äquivalent 16'A korrespondierende Aufnahmeeinrichtung 5 abgegeben. Entsprechendes folgt danach in Zusammenhang mit dem Quell-Aufnahmeeinrichtungs-Äquivalent 16B und dem Ziel-Aufnahmeeinrichtungs-Äquivalent 16'B und, vorzugsweise nachfolgend, mit dem Quell-Aufnahmeeinrichtungs-Äquivalent 16C und dem Ziel-Aufnahmeeinrichtungs-Äquivalent 16'C. Auf diese Weise ist mittels der Steuerungseinrichtung 1 und dem Pipettierautomaten 2 Flüssigkeit 6 derart transferierbar, dass Nachbarschaftsverhältnisse und Ausrichtungen von Flüssigkeiten 6 in den jeweiligen Aufnahmeeinrichtungen 5 systematisch änderbar sind.

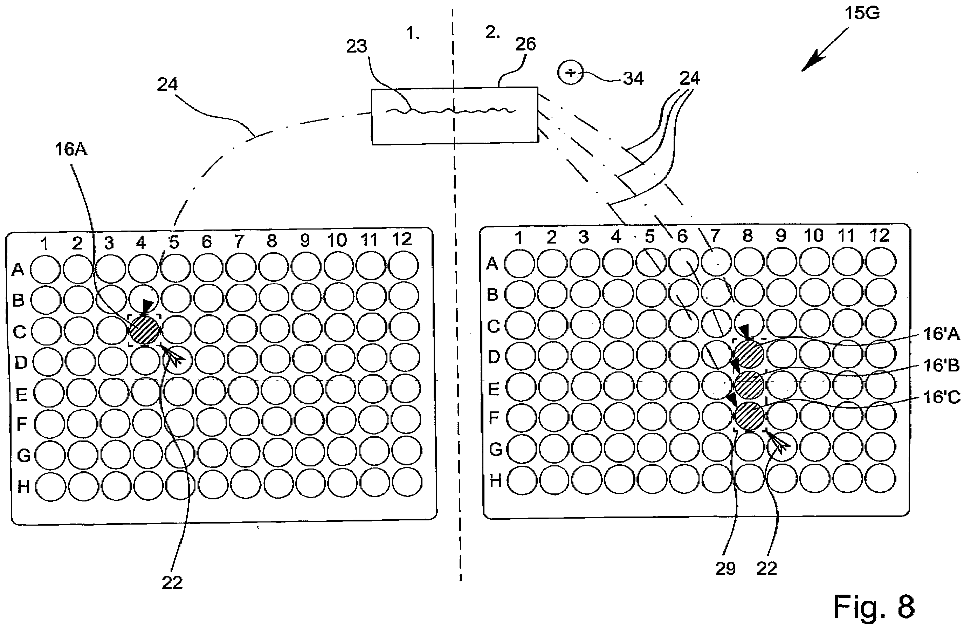

Fig. 8 zeigt in einer schematischen Darstellung eine siebte Konfigurationsoberfläche 15G, bei der nach Auswahl eines Quell-Aufnahmeeinrichtungs-Äquivalents 16A mehrere Ziel-Aufnahmeeinrichtungs-Äquivalente 16'A bis 16'C bzw. eine hierzu korrespondierende Gruppe 29 auswählbar ist/sind, wodurch Transferparameter 23 derart zugeordnet werden oder zuordenbar sind, dass das aus der zu dem Quell-Aufnahmeeinrichtungs-Äquivalent 16A korrespondierenden Aufnahmeeinrichtung 5 aufzunehmende Transfervolumen unter den zu den Ziel-Aufnahmeeinrichtungs-Äquivalenten 16'A bis 16'C korrespondierenden Aufnahmeeinrichtungen 5 aufgeteilt wird. Dies ist in Fig. 8 durch das Geteilt-Symbol 34 angedeutet.

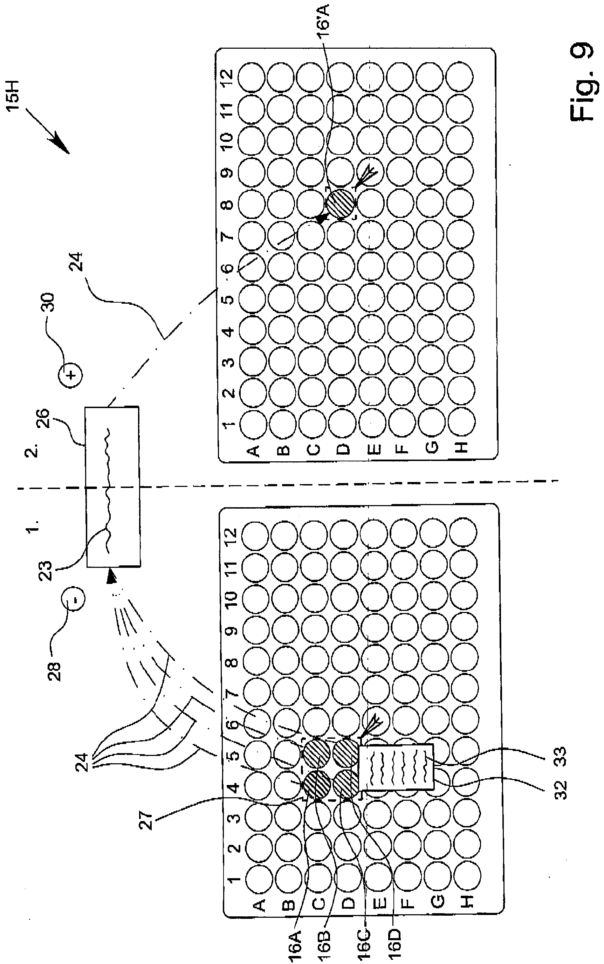

Fig. 9 zeigt in einer schematischen Darstellung eine achte Konfigurationsoberfläche 15H der vorschlagsgemäßen Steuerungseinrichtung 1. In der Konfigurationsoberfläche 15H ist nach Auswahl mehrerer Quell-Aufnahmeeinrichtungs-Äquivalente 16A bis 16D (entsprechend Gruppe 27) ein einzelnes Ziel-Aufnahmeeinrichtungs-Äquivalent 16'A auswählbar, wodurch Transferparameter 23 derart zugeordnet werden oder zuordenbar sind, dass die aus den zu den Quell-Aufnahmeeinrichtungs-Äquivalenten 16A bis 16D korrespondierenden Aufnahmeeinrichtungen 5 aufzunehmenden Transfervolumina in der zu dem Ziel-Aufnahmeeinrichtungs-Äquivalent 16'A korrespondierenden Aufnahmeeinrichtung 5 zusammengefasst werden.

Zur Aktivierung der Aufteilung bzw. Zusammenfassung, wie in Zusammenhang mit Fig. 8 und 9 beschrieben, kann ein Kontextmenü 32 verwendet werden oder auf sonstige Weise in der Konfigurationsoberfläche 15G, 15H eine Option 33 ausgewählt werden, mit der eine entsprechende Aufteilung und/oder Zusammenfassung wie zuvor beschrieben aktiviert werden kann.

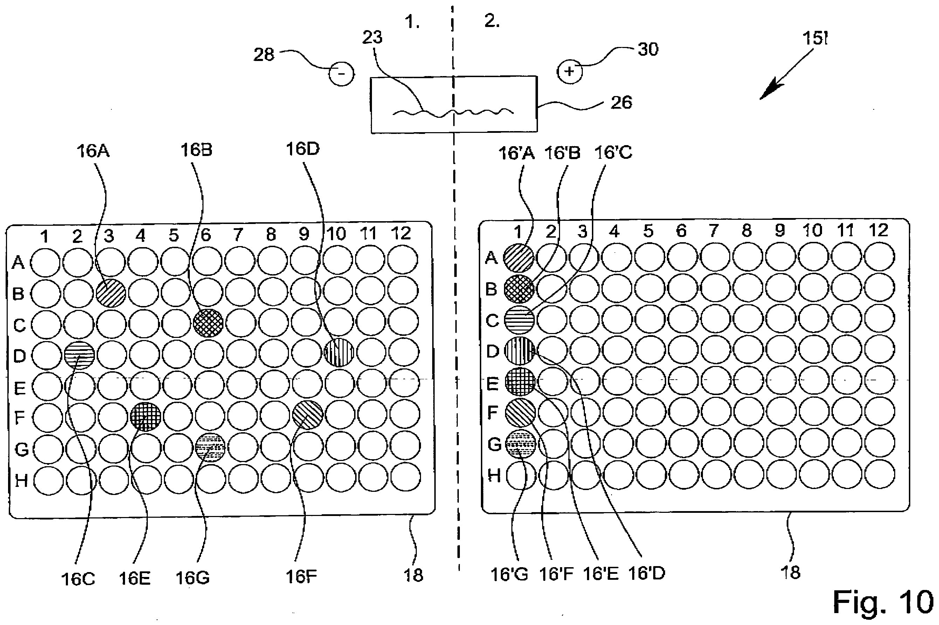

Fig. 10 zeigt in einer schematischen Darstellung eine neunte Konfigurationsoberfläche 15I der vorschlagsgemäßen Steuerungseinrichtung 1. In der Konfigurationsoberfläche 15I sind auf der 1. Seite mehrere ungebündelte Quell-Aufnahmeeinrichtungs-Äquivalente 16A bis 16G ausgewählt und dargestellt. Hierbei ist der Begriff "ungebündelt" so zu verstehen, dass sich auf einem der kürzesten (an Zeilen und Spalten orientierten) Wege zwischen mindestens zwei Aufnahmeeinrichtungs-Äquivalenten mindestens ein nicht ausgewähltes Aufnahmeeinrichtungs-Äquivalent befindet, also die Auswahl sich auf nicht durchgängig benachbarte Aufnahmeeinrichtungs-Äquivalente bezieht.

Mit dem Kontextmenü 32 oder auch auf andere, vorzugsweise in der Konfigurationsoberfläche 15I vorgesehene Weise kann als Option 33 vorzugsweise auswählbar sein oder ausgewählt werden, dass die ausgewählten, ungebündelten Quell-Aufnahmeeinrichtungs-Äquivalente 16A bis 16G gleichzeitig Ziel-Aufnahmeeinrichtungs-Äquivalenten 16'A bis 16'G auf der 2. Seite derart zuordenbar sind, dass die Ziel-Aufnahmeeinrichtungs-Äquivalente 16'A bis 16'G, vorzugsweise spaltenweise, gebündelt angeordnet sind. Vorzugsweise kann dabei angegeben werden, in wie viel nebeneinander befindlichen Spalten die Ziel-Aufnahmeeinrichtungs-Äquivalente 16'A bis 16'G angeordnet sein sollen.

Bei dem in Fig. 10 dargestellten Beispiel werden die auf der 1. Seite ausgewählten, ungebündelten Quell-Aufnahmeeinrichtungs-Äquivalente 16A bis 16G den auf der 2. Seite in Spalte 1 untereinander angeordneten Ziel-Aufnahmeeinrichtungs-Äquivalenten 16'A bis 16'G zugeordnet. Hier wurde also als Spaltenzahl "1" gewählt.

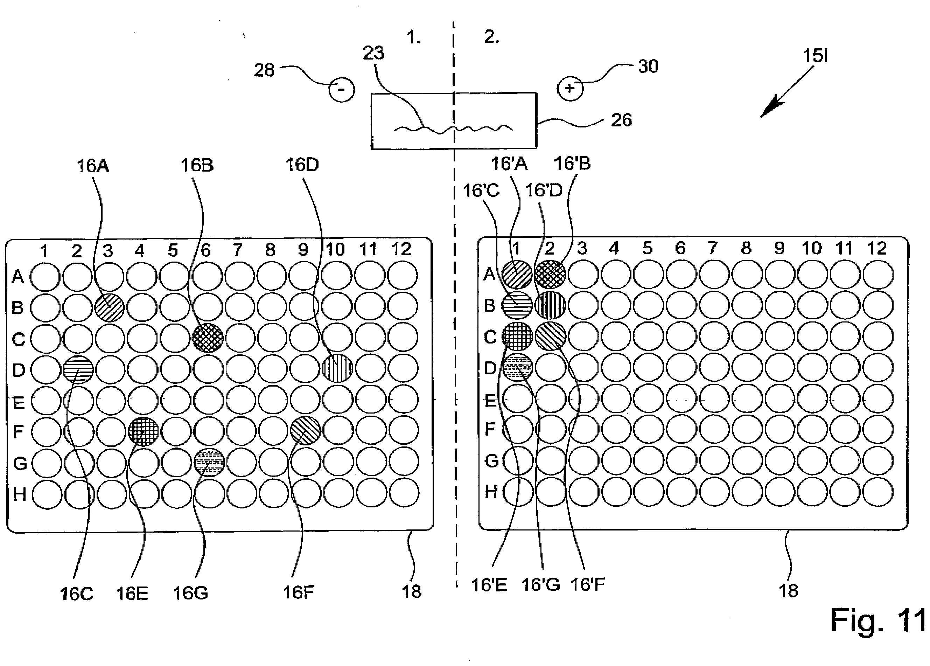

Bei dem in Fig. 11 dargestellten Beispiel werden die auf der 1. Seite ausgewählten, ungebündelten Quell-Aufnahmeeinrichtungs-Äquivalente 16A bis 16G den auf der 2. Seite in Spalten 1 und 2 angeordneten Ziel-Aufnahmeeinrichtungs-Äquivalenten 16'A bis 16'G zugeordnet. Hier wurde als Spaltenzahl "2" gewählt.

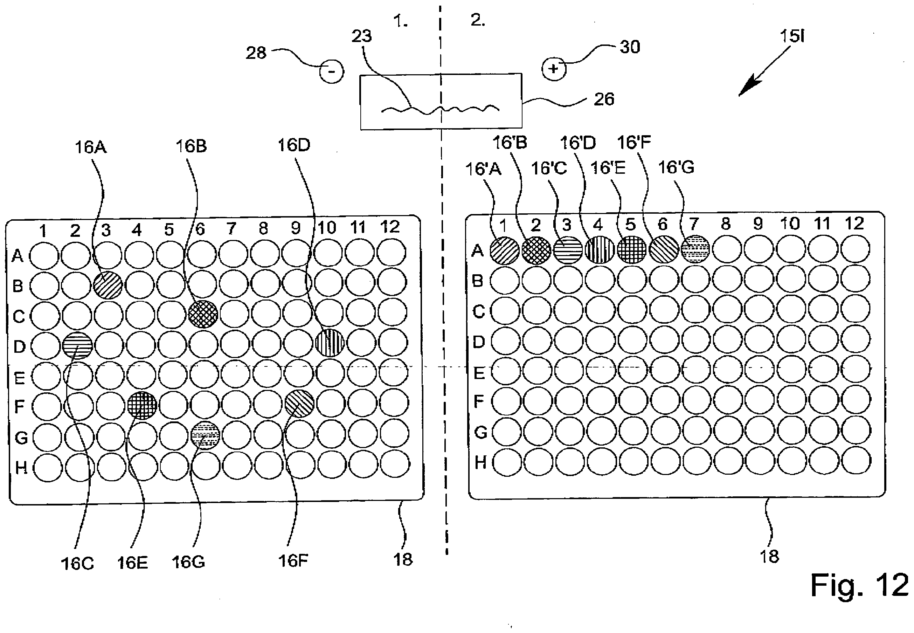

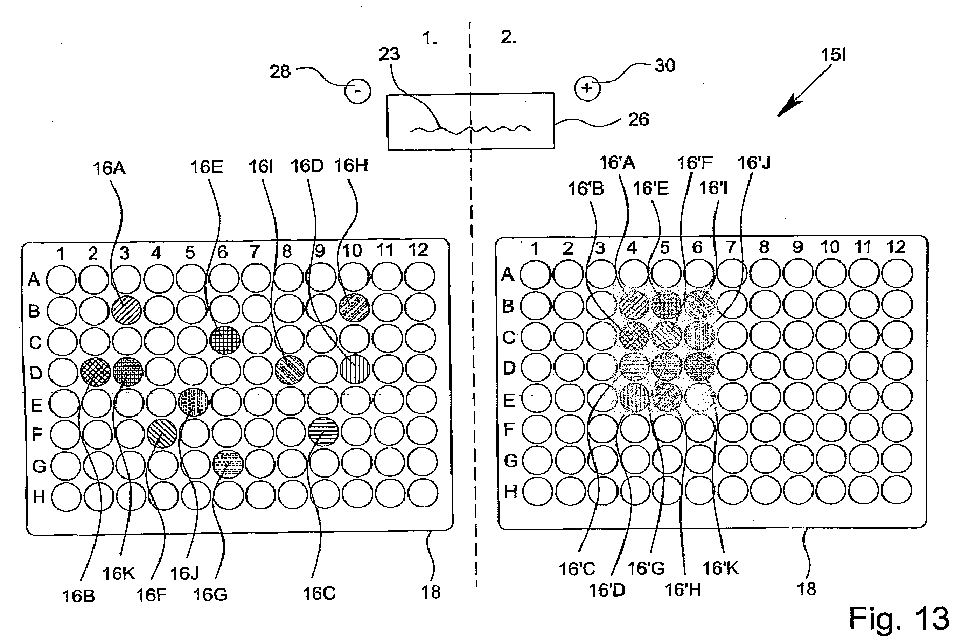

Bei dem in Fig. 12 dargestellten Beispiel werden die auf der 1. Seite ausgewählten, ungebündelten Quell-Aufnahmeeinrichtungs-Äquivalente 16A bis 16G den auf der 2. Seite in Zeile 1 nebeneinander angeordneten Ziel-Aufnahmeeinrichtungs-Äquivalenten 16'A bis 16'G zugeordnet. Hier wurde als Spaltenzahl "7" oder mehr gewählt. Bei dem in Fig. 13 dargestellten Beispiel werden die auf der 1. Seite ausgewählten, ungebündelten Quell-Aufnahmeeinrichtungs-Äquivalente 16A bis 16K den auf der 2. Seite in Spalten 4 bis 6 angeordneten Ziel-Aufnahmeeinrichtungs-Äquivalenten 16'A bis 16'K zugeordnet. Hier wurde als Spaltenzahl "3" gewählt. Außerdem wurde als oberstes linkes Ziel-Aufnahmeeinrichtungs-Äquivalent 16'A das Aufnahmeeinrichtungs-Äquivalent in Zeile B, Spalte 4 auf der 2. Seite gewählt.

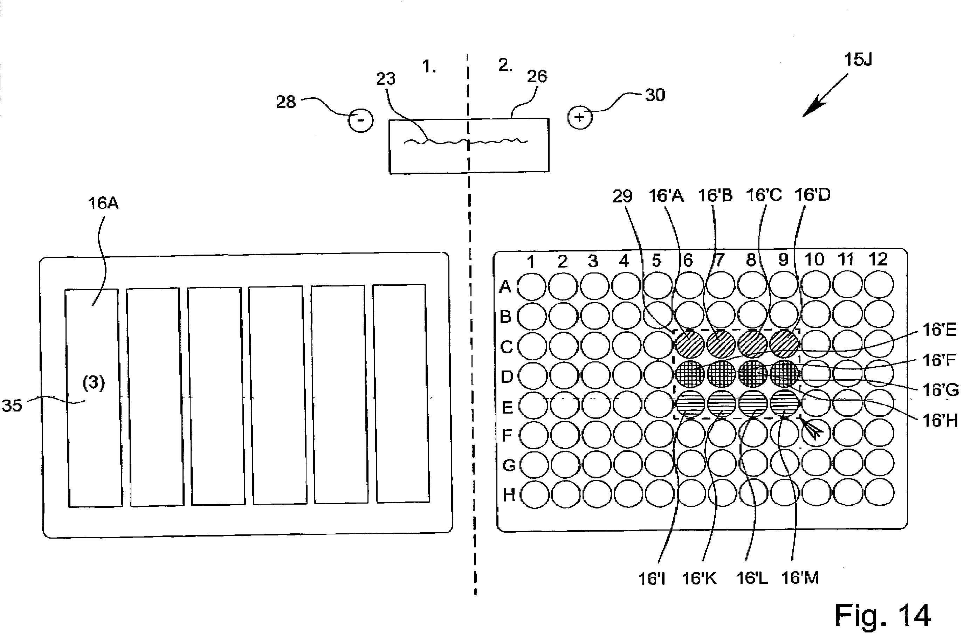

Fig. 14 zeigt in einer schematischen Darstellung eine zehnte Konfigurations-oberfläche 15J der vorschlagsgemäßen Steuerungseinrichtung 1. Hier ist vorgesehen, dass bei gleichzeitiger Auswahl mehrerer Aufnahmeeinrichtungs-Äquivalente 16'A bis 16'M, insbesondere Ziel-Aufnahmeeinrichtungs-Äquivalente 16'A bis 16'M, in deren korrespondierende Aufnahmeeinrichtungen 5 Flüssigkeit 6 abgegeben werden soll, so dass die insgesamt abzugebende Flüssigkeitsmenge ein vorgegebenes, in einem Schritt transferierbares Transfervolumen, insbesondere Aufnahmevolumen der Pipettiervorrichtung 4 bzw. der Pipettenspitzen 7, übersteigt, den Aufnahmeeinrichtungs-Äquivalenten 16A, 16'A bis 16'M automatisch ein weiterer oder mehrere weitere Transferparameter 23 zugeordnet werden, die das vorgegebene Transfervolumen nicht übersteigen, so dass aus der zum Aufnahmeeinrichtungs-Äquivalent 16A korrespondierenden Aufnahmeeinrichtung 5 schrittweise nacheinander und alternierend eine entsprechende Menge an Flüssigkeit 6 entnommen und an die zu den Aufnahmeeinrichtungs-Äquivalenten 16'A bis 16'M korrespondierenden Aufnahmeeinrichtungen 5 abgegeben wird.

Vorzugsweise wird hierbei das vorher ausgewählte (Quell-)Aufnahmeeinrichtungs-Äquivalent 16A in der Konfigurationsoberfläche 15J mit einem zu der Anzahl von automatischen weiteren Zuordnungen korrespondierenden graphischen Indikator 35 versehen. Im Darstellungsbeispiel wird mit dem Indikator 35 die Zahl der Entnahme-Vorgänge angezeigt, insbesondere mittels einer Ziffer.

Alternativ oder zusätzlich werden die Ziel-Aufnahmeeinrichtungs-Äquivalente 16'A bis 16'M, in deren korrespondierende Aufnahmeeinrichtungen 5 Flüssigkeit 6 in einem gemeinsamen Transferschritt abgegeben wird, graphisch gleich und im Vergleich zu den an einem anderen Transferschritt beteiligten Ziel-Aufnahmeeinrichtungs-Äquivalenten 16'A bis 16'M graphisch unterscheidbar, insbesondere andersfarbig, markiert. Im Darstellungsbeispiel erfolgt dies durch unterschiedliche Schraffuren.

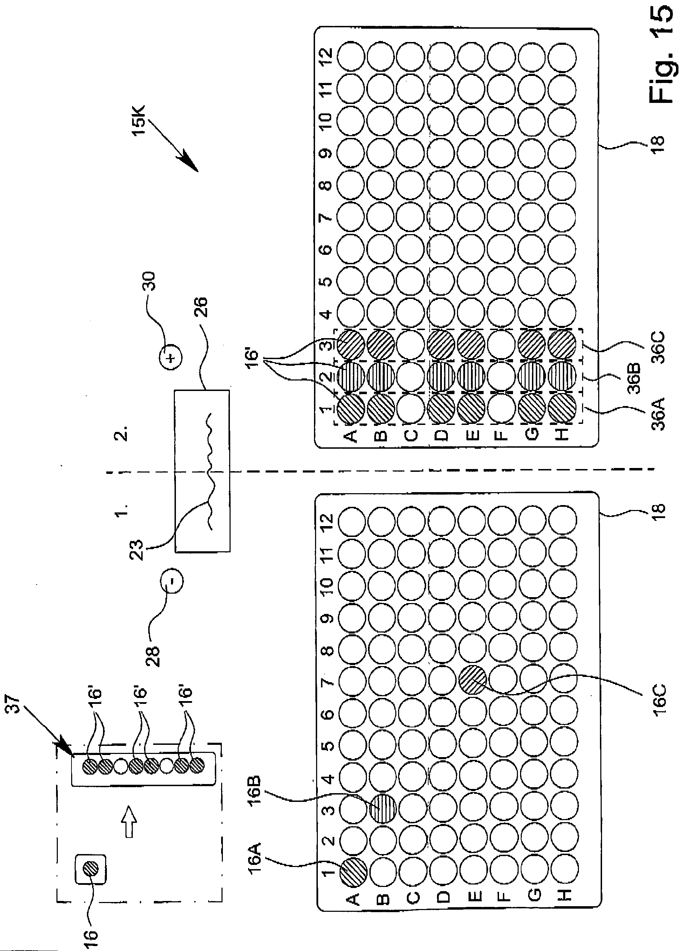

Fig. 15 zeigt in einer schematischen Darstellung eine elfte Konfigurationsoberfläche 15K der vorschlagsgemäßen Steuerungseinrichtung 1. In der Konfigurationsoberfläche 15K oder in einer separaten Konfigurationsoberfläche ist ein Transfermuster 37 vorgebbar. Bei dem in Fig. 15 dargestellten Transfermuster 37 werden einem Quell-Aufnahmeeinrichtungs-Äquivalent 16 sechs in einer Spalte angeordnete Ziel-Aufnahmeeinrichtungs-Äquivalente 16' zugeordnet, wobei nach den ersten beiden untereinander liegenden Ziel-Aufnahmeeinrichtungs-Äquivalenten 16' ein nicht zugeordnetes Aufnahmeeinrichtungs-Äquivalent angeordnet ist. Das gleiche gilt für die nächsten beiden untereinander liegenden Ziel-Aufnahmeeinrichtungs-Äquivalente 16'.

In der Konfigurationsoberfläche 15K sind nun auf der 1. Seite mehrere, nämlich drei Quell-Aufnahmeeinrichtungs-Äquivalente 16A bis 16C ausgewählt und dargestellt. Jedem ausgewählten Quell-Aufnahmeeinrichtungs-Äquivalent 16A bis 16C ist anhand des vorgegebenen Transfermusters 37 eine Untergruppe 36A bis 36C von mindestens einem, nämlich sechs Ziel-Aufnahmeeinrichtungs-Äquivalent/en 16' derart zugeordnet, dass die Anordnung und Anzahl der zugeordneten Ziel-Aufnahmeeinrichtungs-Äquivalente 16' jeder Untergruppe 36A bis 36C der Anordnung und Anzahl der Aufnahmeeinrichtungs-Äquivalente 16 des Transfermusters 37 entspricht.

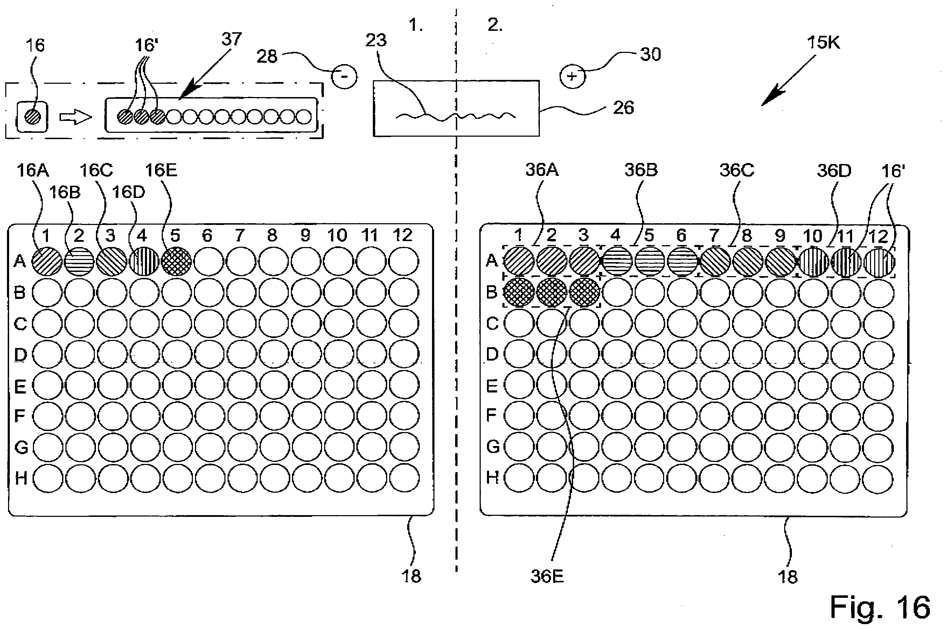

Bei dem in Fig. 16 dargestellten Beispiel ist ein Transfermuster 37 vorgegeben, gemäß dem einem Quell-Aufnahmeeinrichtungs-Äquivalent 16 drei in einer Zeile nebeneinander angeordnete Ziel-Aufnahmeeinrichtungs-Äquivalente 16' zugeordnet werden. In der Konfigurationsoberfläche 15K sind in diesem Beispiel auf der 1. Seite fünf Quell-Aufnahmeeinrichtungs-Äquivalente 16A bis 16E ausgewählt und dargestellt. Jedem ausgewählten Quell-Aufnahmeeinrichtungs-Äquivalent 16A bis 16E ist anhand des vorgegebenen Transfermusters 37 eine Untergruppe 36A bis 36E von genau drei in einer Zeile nebeneinander angeordneten Ziel-Aufnahmeeinrichtungs-Äquivalenten 16' derart zugeordnet, dass die Anordnung und Anzahl der zugeordneten Ziel-Aufnahmeeinrichtungs-Äquivalente 16' jeder Untergruppe 36A bis 36E der Anordnung und Anzahl der Aufnahmeeinrichtungs-Äquivalente 16 des Transfermusters 37 entspricht.

Fig. 17 veranschaulicht ein weiteres Beispiel für ein vergebenes Transfermuster 37 und wie dieses auf vier Quell-Aufnahmeeinrichtungs-Äquivalente 16 angewendet wird.

Es ist jedoch auch möglich, ein Transfermuster 37 vorzugeben, das mehreren, beispielsweise vier, Quell-Aufnahmeeinrichtungs-Äquivalenten 16 jeweils eine Untergruppe 36 von mehreren, beispielsweise acht, Ziel-Aufnahmeeinrichtungs-Äquivalenten 16' zuordnet. Hier entspricht jedoch die Anordnung und Anzahl der zugeordneten Ziel-Aufnahmeeinrichtungs-Äquivalente 16' einer Untergruppe 36 nicht der Anordnung und Anzahl der Aufnahmeeinrichtungs-Äquivalente 16 des Transfermusters 37. Vielmehr werden den ausgewählten Quell-Aufnahmeeinrichtungs-Äquivalenten 16 anhand des Transfermusters 37 gleichzeitig mehrere Ziel-Aufnahmeeinrichtungs-Äquivalente 16' derart zugeordnet, dass die Anordnung und Anzahl der Ziel-Aufnahmeeinrichtungs-Äquivalente 16' insgesamt der Anordnung und Anzahl der Aufnahmeeinrichtungs-Äquivalente 16 des Transfermusters 37 entspricht.

Fig. 18 zeigt in einer schematischen Darstellung eine zwölfte Konfigurations-oberfläche 15M der vorschlagsgemäßen Steuerungseinrichtung 1. In der Konfigurationsoberfläche 15L wurden auf der 1. Seite zunächst alle Quell-Aufnahmeeinrichtungs-Äquivalente 16 markiert. Dann wurde ein elektronisch gespeichertes Auswahlmuster geladen, vorzugsweise in einen Zwischenspeicher. Mit dem Kontextmenü 32 oder auch auf andere, vorzugsweise in der Konfigurationsoberfläche 15L vorgesehene Weise kann als Option 33 vorzugsweise auswählbar sein oder ausgewählt werden, dass die Quell-Aufnahmeeinrichtungs-Äquivalente 16 anhand des geladenen Auswahlmusters ausgewählt werden bzw. sind. Vorzugsweise ist das Auswahlmuster in der Konfigurationsoberfläche 15L darstellbar. Anhand der Zuweisung des dargestellten Auswahlmusters zu Quell-Aufnahmeeinrichtungs-Äquivalenten 16 werden diese dann ausgewählt.

Als Auswahlmuster können z. B. Spalten- und Zeilenangaben zu den auszuwählenden Quell-Aufnahmeeinrichtungs-Äquivalenten 16. Es können auch Volumenangaben mit Spalten- und Zeilenangaben gespeichert sein, wobei diejenigen Spalten-/Zeilen-Kombinationen, die eine positive Volumenangabe haben, auszuwählende Quell-Aufnahmeeinrichtungs-Äquivalente 16 kennzeichnen. Es werden diejenigen Quell-Aufnahmeeinrichtungs-Äquivalente 16 mit derselben Spalten- und Zeilenangabe in der Konfigurationsoberfläche 15L dargestellt.

Das Auswahlmuster kann in einer Datei, z. B. als Liste, gespeichert und mittels der Steuerungseinrichtung 1 öffenbar und in einen Zwischenspeicher ladbar sein.

Nicht dargestellt ist ein weiterer, auch unabhängig realisierbarer Aspekt der vorliegenden Erfindung. Gemäß diesem Aspekt sind mehrere Quell-Aufnahmeeinrichtungs-Äquivalente 16 eines Quell-Pipettiereinheit-Äquivalents 18 auswählbar. Die ausgewählten Quell-Aufnahmeeinrichtungs-Äquivalente 16 sind in einer Konfigurationsoberfläche 15 darstellbar. Die ausgewählten Quell-Aufnahmeeinrichtungs-Äquivalente 16 sind in mindestens zwei Untergruppen aufteilbar und diese Untergruppen sind nacheinander mehreren Ziel-Aufnahmeeinrichtungs-Äquivalenten 16' eines Ziel-Pipettiereinheit-Äquivalents 18 zuordenbar. Dabei sind alle Quell-Aufnahmeeinrichtungs-Äquivalente 16 jeder Untergruppe gleichzeitig den jeweiligen Ziel-Aufnahmeeinrichtungs-Äquivalenten 16' zuordenbar.

Dadurch werden den ausgewählten Quell-Aufnahmeeinrichtungs-Äquivalenten 16 und den ihnen zugeordneten Ziel-Aufnahmeeinrichtungs-Äquivalenten 16' Transferparameter 23 derart zugeordnet werden, dass jeweils das korrespondierende Transfervolumen aus den zu den ausgewählten Quell-Aufnahmeeinrichtungs-Äquivalenten 16 korrespondierenden Aufnahmeeinrichtungen 5 in die zu den zugeordneten Ziel-Aufnahmeeinrichtungs-Äquivalenten 16' korrespondierenden Aufnahmeeinrichtungen 5 transferierbar ist.

Dabei sind die zugeordneten Ziel-Aufnahmeeinrichtungs-Äquivalente 16' in derselben Konfigurationsoberfläche 15 wie die ausgewählten Quell-Aufnahmeeinrichtungs-Äquivalente 16 darstellbar.

Nicht dargestellt ist ein weiterer, auch unabhängig realisierbarer Aspekt der vorliegenden Erfindung. Gemäß diesem Aspekt sind die Schritte, die der Pipettierautomat 2 durchführt, erfassbar und elektronisch speicherbar, z. B. als ein Report, vorzugsweise in einer editierbaren elektronischen Datei. Ein solcher Report bzw. eine solche Aufzeichnung kann automatisch oder manuell über einen Steuerbefehl bzw. die Konfigurationsoberfläche 15 initiiert und/oder beendet werden. Ein solcher Report kann neben den einzelnen durchgeführten Schritten bzw. zeitlichen Abfolgen auch Transferparameter 23, die Positionen bzw. Wege der Pipettiervorrichtung 4 und/oder Zeitangaben, beispielsweise der Durchführung, umfassen.

Vorzugsweise kann ein solcher Report oder eine Kurzfassung dessen elektronisch übermittelt werden, z. B. an einen Computer, ein Smartphone, Tablet etc. Die Übermittlung kann beispielsweise während der Durchführung von Schritten des Pipettierautomaten 2, nach Beendigung einer zusammenhängenden Schrittfolge, bei Störungen oder Statusänderungen der Steuerungseirichtung 1 und/oder des Pipettierautomaten 2 stattfinden. Die Übermittlung kann z. B. via Funktechnologien erfolgen, vorzugsweise als eine elektronische Nachricht, wie eine E-Mail oder SMS. Es ist auch möglich, eine Benachrichtigung über die Durchführung von Schritten mittels des Pipettierautomaten 2 ohne einen Report zu übermitteln.

Die zuvor beschriebenen Aspekte sind vorzugsweise untereinander kombinierbar. Ferner kann vorgesehen sein, dass die in Zusammenhang mit den Konfigurationsoberflächen 15B bis 15L erläuterten Prinzipien als unterschiedliche Optionen und/oder mittels eines oder mehrerer Kontextmenüs 32 in derselben Konfigurationsoberfläche anwählbar sind. Hierzu können insbesondere virtuelle Schalter, Checkboxen, Drop-Down-Menüs, Soft-Buttons o. dgl. vorgesehen sein. Ferner ist bevorzugt, dass in derselben Konfigurationsoberfläche 15B bis 15L sowohl Aufnahmeeinrichtungs-Äquivalente 16A bis 16F auswählbar als auch das Kontextmenü 32 generierbar und hierdurch oder in anderer Weise eine oder mehrere Optionen 33 wählbar oder konfigurierbar sind, vorzugsweise wobei eine oder mehrere Volumendifferenz/-en, Volumina, Zielvolumina und/oder das Zusammenfassen, das Aufteilen oder eine geänderte Anordnung festlegbar, einstellbar oder aktivierbar ist/sind.

Die zuvor beschriebenen Aspekte sind insbesondere nacheinander anwendbar bzw. ausführbar. So können beispielsweise mehrere ungebündelte Quell-Aufnahmeeinrichtungs-Äquivalente 16A bis 16G zunächst ausgewählt und als gebündelte Aufnahmeeinrichtungs-Äquivalente angezeigt werden. Die angezeigten Aufnahmeeinrichtungs-Äquivalente können dann z. B. gedreht oder gespiegelt und in dieser Anordnung dann, vorzugsweise mehrfach, Ziel-Aufnahmeeinrichtungs-Äquivalenten 16' zugeordnet werden.

Die vorliegende Erfindung betrifft auch ein Verfahren zur Steuerung des Pipettierautomaten 2 mit der Steuerungseinrichtung 1, wobei die zuvor beschriebenen Prinzipien in Alleinstellung oder in Kombination durchgeführt werden. Vorzugsweise wird hierzu eine Eingabe mittels der Eingabeeinrichtung 10 durch die Steuerungseinrichtung 1 derart interpretiert, dass auswählbare Aufnahmeeinrichtungs-Äquivalente 16, 16' teilweise, einzeln oder gruppenweise ausgewählt werden, insbesondere durch Bewegen des Auswahlwerkzeugs 22 und einer währenddessen und/oder daraufhin folgenden Eingabe, beispielsweise mittels eines Schalters oder Knopfes. Die Steuerungseinrichtung 1 interpretiert dies vorzugsweise als Auswahl des jeweiligen Aufnahmeeinrichtungs-Äquivalents 16, 16' oder einer entsprechenden ersten oder zweiten Gruppe 27, 29 und führt vorzugsweise einzelne oder eine Kombination von Schritten aus, von denen zuvor beschrieben worden ist, dass die Steuerungseinrichtung 1 hierzu geeignet ist.

Ferner ist bevorzugt, dass das Verfahren die Steuerung des Pipettierautomaten 2 umfasst. Hierzu kann vorgesehen sein, dass die Steuerungseinrichtung 1 die unterschiedlichen Auswahlen von Aufnahmeeinrichtungs-Äquivalenten 16, 16', besonders bevorzugt in der jeweiligen chronologischen Reihenfolge der Auswahl und unter Berücksichtigung der jeweils während der Auswahl aktiven Optionen 33, dadurch steuert, dass die Steuerungseinrichtung 1 Maschinenbefehle generiert und an den Pipettierautomaten 2 übermittelt. Hierdurch werden insbesondere Aktuatoren 3A bis 3C des Pipettierautomaten 2 derart gesteuert, dass die zuvor konfigurierten Aufnahmen und Abgaben der jeweiligen Transfervolumina aus bzw. in die Aufnahmeeinrichtungen 5 bewirkt werden.

### Bezugszeichenliste:

- 1: Steuerungseinrichtung
- 2: Pipettierautomat
- 3: Aktuator
- 4: Pipettiervorrichtung
- 5: Aufnahmeeinrichtung
- 6: Flüssigkeit
- 7: Pipettenspitze
- 8: Pipettiereinheit
- 9: Datenschnittstelle
- 10: Eingabeeinrichtung
- 11: Tastatur
- 12: Computermaus
- 13: Anzeigeeinrichtung
- 14: Speichermedium
- 15: Konfigurationsoberfläche
- 16: Aufnahmeeinrichtungs-Äquivalent auf der 1. Seite
- 16': Aufnahmeeinrichtungs-Äquivalent auf der 2. Seite
- 17: Virtuelle Position
- 18: Pipettiereinheit-Äquivalent
- 19: Umschaltmittel
- 20: Konfigurationsanzeige
- 21: Anzeigeabschnitt
- 22: Auswahlwerkzeug
- 23: Transferparameter
- 24: Pfeil
- 25: Ist-Volumen-Parameter
- 26: Eingabemaske
- 27: erste Gruppe
- 28: Minus-Symbol
- 29: zweite Gruppe
- 30: Plus-Symbol
- 31: Zielvolumen
- 32: Kontextmenü
- 33: Option
- 34: Geteilt-Symbol
- 35: Indikator
- 36: Untergruppe
- 37: Transfermuster

## Patentansprüche

1. Steuerungseinrichtung (1) zur Steuerung eines Pipettierautomaten (2), wobei
- die Steuerungseinrichtung (1) zur Steuerung mindestens eines Aktuators (3A-3C) des Pipettierautomaten (2) ausgebildet ist, wobei der Aktuator (3A-3C) zur Bewegung einer Pipettiervorrichtung (4) des Pipettierautomaten (2) zwischen Aufnahmeeinrichtungen (5) für zu pipettierende Flüssigkeiten (6) ausgebildet ist, wobei die Pipettiervorrichtung (4) zur Aufnahme von zu pipettierenden Flüssigkeiten (6) und zur Abgabe von zu pipettierenden Flüssigkeiten (6) ausgebildet ist,
- die Steuerungseinrichtung (1) eine Eingabeeinrichtung (10) und eine Anzeigeeinrichtung (13) aufweist, wobei durch die Anzeigeeinrichtung (13) mehrere Konfigurationsoberflächen (15A-15L) dargestellt werden,
und die Steuerungseinrichtung (1) dazu ausgebildet ist,
- dass mehrere graphische Aufnahmeeinrichtungs-Äquivalente (16), die zu Aufnahmeeinrichtungen (5) korrespondieren und jeweils mindestens eine Aufnahmeeinrichtung (5) repräsentieren, auf der Anzeigeeinrichtung (13) in einer Konfigurationsoberfläche (15A-15L) dargestellt werden,
- dass in der Konfigurationsoberfläche (15A-15L) mehrere Aufnahmeeinrichtungs-Äquivalente (16), aus deren korrespondierenden Aufnahmeeinrichtungen (5) Flüssigkeit (6) entnommen werden soll, nacheinander oder gleichzeitig als Quell-Aufnahmeeinrichtungs-Äquivalente (16A-16K) eines Quell-Pipettiereinheit-Äquivalents (18) ausgewählt werden,
- dass in der Konfigurationsoberfläche (15A-15L) zunächst durch Auswahl der Quell-Aufnahmeeinrichtungs-Äquivalente (16A-16K) eine graphische Repräsentation der ausgewählten Quell-Aufnahmeeinrichtungs-Äquivalente (16A-16K) erzeugt wird,
- dass in der Konfigurationsoberfläche (15A-15L) die graphische Repräsentation der ausgewählten Quell-Aufnahmeeinrichtungs-Äquivalente (16A-16K) dann hinsichtlich der Anzahl und/oder Anordnung der ausgewählten Quell-Aufnahmeeinrichtungs-Äquivalente (16A-16K) verändert wird,
- dass in der Konfigurationsoberfläche (15A-15L) schließlich anhand der graphischen Repräsentation mehrere weitere Aufnahmeeinrichtungs-Äquivalente (16') als Ziel-Aufnahmeeinrichtungs-Äquivalente (16'A-16'K), in deren korrespondierende Aufnahmeeinrichtungen (5) Flüssigkeit (6) abgegeben werden soll, ausgewählt werden und dadurch die ausgewählten Quell-Aufnahmeeinrichtungs-Äquivalente (16A-16K) gleichzeitig den ausgewählten Ziel-Aufnahmeeinrichtungs-Äquivalenten (16'A-16'K) derart zugeordnet werden, dass sich die Anordnung und/oder Anzahl der zugeordneten Ziel-Aufnahmeeinrichtungs-Äquivalente (16'A-16'K) von der Anordnung und/oder Anzahl der ausgewählten Quell-Aufnahmeeinrichtungs-Äquivalente (16A-16K) unterscheidet,
- wodurch den ausgewählten Quell-Aufnahmeeinrichtungs-Äquivalenten (16A-16K) und den ihnen zugeordneten Ziel-Aufnahmeeinrichtungs-Äquivalenten (16'A-16'K) mittels der Eingabeeinrichtung (10) Transferparameter (23) derart zugeordnet werden, dass jeweils ein zu dem jeweiligen Transferparameter (23) korrespondierendes Transfervolumen aus den zu den ausgewählten Quell-Aufnahmeeinrichtungs-Äquivalenten (16A-16K) korrespondierenden Aufnahmeeinrichtungen (5) in die zu den zugeordneten Ziel-Aufnahmeeinrichtungs-Äquivalenten (16'A-16'K) korrespondierenden Aufnahmeeinrichtungen (5) transferiert wird, und
- dass die zugeordneten Ziel-Aufnahmeeinrichtungs-Äquivalente (16'A-16'K) in derselben Konfigurationsoberfläche (15A-15L) wie die ausgewählten Quell-Aufnahmeeinrichtungs-Äquivalente (16A-16K) dargestellt werden.

2. Steuerungseinrichtung (1) nach Anspruch 1, **dadurch gekennzeichnet, dass** die Steuerungseinrichtung (1) dazu ausgebildet ist, dass die ausgewählten Quell-Aufnahmeeinrichtungs-Äquivalente (16A-16K) gleichzeitig den Ziel-Aufnahmeeinrichtungs-Äquivalenten (16') derart zugeordnet werden, dass die Anordnung der zugeordneten Ziel-Aufnahmeeinrichtungs-Äquivalente (16'A-16'K) einer Spiegelung, Drehung, zeilenweisen oder spaltenweisen Vertauschung und/oder zeilenweisen oder spaltenweisen Verschiebung der Anordnung der ausgewählten Quell-Aufnahmeeinrichtungs-Äquivalente (16A-16K) entspricht.

3. Steuerungseinrichtung (1) nach Anspruch 1 oder 2, **dadurch gekennzeichnet, dass** die Steuerungseinrichtung (1) dazu ausgebildet ist, dass ausgewählte ungebündelte Quell-Aufnahmeeinrichtungs-Äquivalente (16A-16K), bei denen sich auf einem der kürzesten an Zeilen und Spalten orientierten Wege zwischen mindestens zwei ausgewählten Quell-Aufnahmeeinrichtungs-Äquivalenten (16A-16K) mindestens ein nicht ausgewähltes Quell-Aufnahmeeinrichtungs-Äquivalent (16A-16K) befindet, gleichzeitig Ziel-Aufnahmeeinrichtungs-Äquivalenten (16'A-16'K) derart zugeordnet werden, dass die zugeordneten Ziel-Aufnahmeeinrichtungs-Äquivalente (16'A-16'K) gebündelt angeordnet sind.

4. Steuerungseinrichtung (1) nach einem der voranstehenden Ansprüche, **dadurch gekennzeichnet, dass** die Steuerungseinrichtung (1) dazu ausgebildet ist, dass die Quell-Aufnahmeeinrichtungs-Äquivalente (16A-16K) mittels eines elektronisch gespeicherten Auswahlmusters ausgewählt werden und das Auswahlmuster in der Konfigurationsoberfläche (15A-15L) dargestellt wird.

5. Steuerungseinrichtung (1) nach einem der voranstehenden Ansprüche, **dadurch gekennzeichnet, dass** die Steuerungseinrichtung (1) dazu ausgebildet ist, dass einem oder mehreren ausgewählten Quell-Aufnahmeeinrichtungs-Äquivalent/en (16A-16K) anhand eines vorgebbaren Transfermusters von Aufnahmeeinrichtungs-Äquivalenten (16) jeweils eine Untergruppe (36) von mindestens einem, vorzugsweise mehreren Ziel-Aufnahmeeinrichtungs-Äquivalent/en (16'A-16'K) derart zugeordnet wird, dass die Anordnung und Anzahl der Ziel-Aufnahmeeinrichtungs-Äquivalente (16'A-16'K) der jeweiligen Untergruppe (36) der Anordnung und Anzahl der Aufnahmeeinrichtungs-Äquivalente (16) des Transfermusters entspricht oder
dass mehreren ausgewählten Quell-Aufnahmeeinrichtungs-Äquivalenten (16A-16K) anhand eines vorgebbaren Transfermusters von Aufnahmeeinrichtungs-Äquivalenten (16) gleichzeitig mehrere Ziel-Aufnahmeeinrichtungs-Äquivalente (16'A-16'K) derart zugeordnet werden, dass die Anordnung und Anzahl der Ziel-Aufnahmeeinrichtungs-Äquivalente (16'A-16'K) der Anordnung und Anzahl der Aufnahmeeinrichtungs-Äquivalente (16) des Transfermusters entspricht.

6. Steuerungseinrichtung (1) nach einem der voranstehenden Ansprüche **dadurch gekennzeichnet, dass** die Steuerungseinrichtung (1) dazu ausgebildet ist,
dass die ausgewählten Quell-Aufnahmeeinrichtungs-Äquivalente (16A-16K) in mindestens zwei Untergruppen aufgeteilt und diese Untergruppen nacheinander den Ziel-Aufnahmeeinrichtungs-Äquivalenten (16'A-16'K) zugeordnet werden, wobei alle Quell-Aufnahmeeinrichtungs-Äquivalente (16A-16K) jeder Untergruppe gleichzeitig den jeweiligen Ziel-Aufnahmeeinrichtungs-Äquivalenten (16'A-16'K ') zugeordnet werden.

7. Pipettierautomat mit einer Steuerungseinrichtung (1) gemäß einem der voranstehenden Ansprüche, wobei der Pipettierautomat (2) mindestens einen Aktuator (3A-3C) zur Bewegung einer Pipettiervorrichtung (4) zwischen Aufnahmeeinrichtungen (5) für zu pipettierende Flüssigkeiten (6) aufweist, wobei die Pipettiervorrichtung (4) zur Flüssigkeitsaufnahme und zur Flüssigkeitsabgabe ausgebildet ist und wobei der Aktuator (3A-3C) durch die Steuerungseinrichtung (1) gesteuert wird.

8. Verfahren zur Steuerung eines Pipettierautomaten (2) zur Steuerung mindestens eines Aktuators (3A-3C) des Pipettierautomaten (2), wobei der Aktuator (3A-3C) zur Bewegung einer Pipettiervorrichtung (4) des Pipettierautomaten (2) zwischen Aufnahmeeinrichtungen (5) für zu pipettierende Flüssigkeiten (6) ausgebildet ist, wobei die Pipettiervorrichtung (4) zur Aufnahme von zu pipettierenden Flüssigkeiten (6) und zur Abgabe von zu pipettierenden Flüssigkeiten (6) ausgebildet ist, mit einer Steuerungseinrichtung (1) aufweisend eine Eingabeeinrichtung (10) und eine Anzeigeeinrichtung (13),
wobei durch die Anzeigeeinrichtung (13) mehrere Konfigurationsoberflächen (15A-15L) dargestellt werden und
wobei mehrere graphische Aufnahmeeinrichtungs-Äquivalente (16), die zu Aufnahmeeinrichtungen (5) korrespondieren und jeweils mindestens eine Aufnahmeeinrichtung (5) repräsentieren, auf der Anzeigeeinrichtung (13) in einer Konfigurationsoberfläche (15A-15L) dargestellt werden,
wobei in der Konfigurationsoberfläche (15A-15L) mehrere Aufnahmeeinrichtungs-Äquivalente (16), aus deren korrespondierenden Aufnahmeeinrichtungen (5) Flüssigkeit (6) entnommen werden soll, nacheinander oder gleichzeitig als Quell-Aufnahmeeinrichtungs-Äquivalente (16A-16K) eines Quell-Pipettiereinheit-Äquivalents (18) ausgewählt werden,
- wobei in der Konfigurationsoberfläche (15A-15L) zunächst durch Auswahl der Quell-Aufnahmeeinrichtungs-Äquivalente (16A-16K) eine graphische Repräsentation der ausgewählten Quell-Aufnahmeeinrichtungs-Äquivalente (16A-16K) erzeugt wird,
- wobei in der Konfigurationsoberfläche (15A-15L) die graphische Repräsentation der ausgewählten Quell-Aufnahmeeinrichtungs-Äquivalente (16A-16K) dann hinsichtlich der Anzahl und/oder Anordnung der ausgewählten Quell-Aufnahmeeinrichtungs-Äquivalente (16A-16K) verändert wird,
- wobei in der Konfigurationsoberfläche (15A-15L) schließlich anhand der graphischen Repräsentation mehrere weitere Aufnahmeeinrichtungs-Äquivalente (16') als Ziel-Aufnahmeeinrichtungs-Äquivalente (16'A-16'K), in deren korrespondierende Aufnahmeeinrichtungen (5) Flüssigkeit (6) abgegeben werden soll, ausgewählt werden und dadurch die ausgewählten Quell-Aufnahmeeinrichtungs-Äquivalente (16A-16K) gleichzeitig den ausgewählten Ziel-Aufnahmeeinrichtungs-Äquivalenten (16'A-16'K) derart zugeordnet werden, dass sich die Anordnung und/oder Anzahl der zugeordneten Ziel-Aufnahmeeinrichtungs-Äquivalente (16'A-16'K) von der Anordnung und/oder Anzahl der ausgewählten Quell-Aufnahmeeinrichtungs-Äquivalente (16A-16K) unterscheidet,
- wodurch den ausgewählten Quell-Aufnahmeeinrichtungs-Äquivalenten (16A-16K) und den ihnen zugeordneten Ziel-Aufnahmeeinrichtungs-Äquivalenten (16'A-16'K) mittels der Eingabeeinrichtung (10) Transferparameter (23) derart zugeordnet werden, dass jeweils ein zu dem jeweiligen Transferparameter (23) korrespondierendes Transfervolumen aus den zu den ausgewählten Quell-Aufnahmeeinrichtungs-Äquivalenten (16A-16K) korrespondierenden Aufnahmeeinrichtungen (5) in die zu den zugeordneten Ziel-Aufnahmeeinrichtungs-Äquivalenten (16'A-16'K) korrespondierenden Aufnahmeeinrichtungen (5) transferiert wird, und
- wobei die zugeordneten Ziel-Aufnahmeeinrichtungs-Äquivalente (16'A-16'K) in derselben Konfigurationsoberfläche (15A-15L) wie die ausgewählten Quell-Aufnahmeeinrichtungs-Äquivalente (16A-16K) dargestellt werden.

9. Verfahren nach Anspruch 8, **dadurch gekennzeichnet, dass** die ausgewählten Quell-Aufnahmeeinrichtungs-Äquivalente (16A-16K) gleichzeitig den Ziel-Aufnahmeeinrichtungs-Äquivalenten (16'A-16'K) derart zugeordnet werden, dass die Anordnung der zugeordneten Ziel-Aufnahmeeinrichtungs-Äquivalente (16'A-16'K) einer Spiegelung, Drehung, zeilenweisen oder spaltenweisen Vertauschung und/oder zeilenweisen oder spaltenweisen Verschiebung der Anordnung der ausgewählten Quell-Aufnahmeeinrichtungs-Äquivalente (16A-16K) entspricht.

10. Verfahren nach Anspruch 8 oder 9 **dadurch gekennzeichnet, dass** ausgewählte ungebündelte Quell-Aufnahmeeinrichtungs-Äquivalente (16A-16K), bei denen sich auf einem der kürzesten an Zeilen und Spalten orientierten Wege zwischen mindestens zwei ausgewählten Quell-Aufnahmeeinrichtungs-Äquivalenten (16A-16K) mindestens ein nicht ausgewähltes Quell-Aufnahmeeinrichtungs-Äquivalent (16A-16K) befindet, gleichzeitig Ziel-Aufnahmeeinrichtungs-Äquivalenten (16'A-16'K) derart zugeordnet werden, dass die zugeordneten Ziel-Aufnahmeeinrichtungs-Äquivalente (16'A-16'K) gebündelt angeordnet sind.

11. Verfahren nach einem der Ansprüche 8 bis 10, **dadurch gekennzeichnet, dass** die Quell-Aufnahmeeinrichtungs-Äquivalente (16A-16K) mittels eines elektronisch gespeicherten Auswahlmusters ausgewählt werden und das Auswahlmuster in der Konfigurationsoberfläche (15A-15L) dargestellt wird.

12. Verfahren nach einem der Ansprüche 8 bis 11, **dadurch gekennzeichnet, dass** einem oder mehreren ausgewählten Quell-Aufnahmeeinrichtungs-Äquivalent/en (16A-16K) anhand eines vorgebbaren Transfermusters von Aufnahmeeinrichtungs-Äquivalenten (16) jeweils eine Untergruppe (36) von mindestens einem, vorzugsweise mehreren Ziel-Aufnahmeeinrichtungs-Äquivalent/en (16'A-16'K) derart zugeordnet wird, dass die Anordnung und Anzahl der zugeordneten Ziel-Aufnahmeeinrichtungs-Äquivalente (16'A-16'K) der jeweiligen Untergruppe (36) der Anordnung und Anzahl der Aufnahmeeinrichtungs-Äquivalente (16) des Transfermusters entspricht, oder
dass mehreren ausgewählten Quell-Aufnahmeeinrichtungs-Äquivalenten (16A-16K) anhand eines vorgebbaren Transfermusters von Aufnahmeeinrichtungs-Äquivalenten (16) gleichzeitig mehrere Ziel-Aufnahmeeinrichtungs-Äquivalente (16'A-16'K) derart zugeordnet werden, dass die Anordnung und Anzahl der Ziel-Aufnahmeeinrichtungs-Äquivalente (16'A-16'K) der Anordnung und Anzahl der Aufnahmeeinrichtungs-Äquivalente (16) des Transfermusters entspricht.

13. Verfahren nach einem der Ansprüche 8 bis 12, **dadurch gekennzeichnet, dass** die ausgewählten Quell-Aufnahmeeinrichtungs-Äquivalente (16A-16K) in mindestens zwei Untergruppen aufgeteilt und diese Untergruppen nacheinander den Ziel-Aufnahmeeinrichtungs-Äquivalenten (16'A-16'K) zugeteilt werden, wobei alle Quell-Aufnahmeeinrichtungs-Äquivalente (16A-16K) jeder Untergruppe gleichzeitig den jeweiligen Ziel-Aufnahmeeinrichtungs-Äquivalenten (16'A-16'K) zugeordnet werden.

14. Computerprogrammprodukt mit Programmcodemitteln, die dazu ausgebildet sind, das Verfahren gemäß einem der Ansprüche 8 bis 13 auszuführen, wenn die Programmcodemittel auf einem Computer oder durch einen Prozessor ausgeführt werden.

## Claims

1. A control unit (1) for controlling a pipetting machine (2), wherein
- the control unit (1) is configured for controlling at least one actuator (3A-3C) of the pipetting machine (2) for moving a pipetting device (4) of the pipetting machine (2) between receptacle units (5) for liquids (6) to be pipetted, wherein the pipetting device (4) is configured for receiving liquids (6) to be pipetted and dispensing liquids (6) to be pipetted,
- the control unit (1) has an input unit (10) and a display unit (13), wherein multiple configuration interfaces (15A-15L) are displayed by the display unit (13),
and the control unit (1) is configured,
- so that multiple graphic receptacle unit equivalents (16), which correspond to receptacle units (5) and each represent at least one receptacle unit (5), are displayed on the display unit (13) in a configuration interface (15A-15L),
- so that in the configuration interface (15A-15L) multiple receptacle unit equivalents (16), from the corresponding receptacle units (5) of which liquid (6) is to be retrieved, are selected successively or simultaneously as source receptacle unit equivalents (16A-16K) of a source pipetting unit equivalent (18),
- so that, in the configuration interface (15A-15L), a graphical representation of the selected source receptacle unit equivalents (16A-16K) is first generated by selecting the source receptacle unit equivalents (16A-16K),
- so that, in the configuration interface (15A-15L), the graphical representation of the selected source receptacle unit equivalents (16A-16K) is then changed with respect to the number and/or arrangement of the selected source receptacle unit equivalents (16A-16K),
- so that, in the configuration surface (15A-15L), finally, on the basis of the graphic representation several further receptacle unit equivalents (16') are selected as target receptacle unit equivalents (16'A-16'K), into whose corresponding receptacle units (5) liquid (6) is to be dispensed, and thereby the selected source receptacle unit equivalents (16A-16K) are simultaneously assigned to the selected target receptacle unit equivalents (16'A-16'K) such that the arrangement and/or number of the assigned target receptacle unit equivalents (16'A-16'K) differs from the arrangement and/or number of the selected source receptacle unit equivalents (16A-16K),
- which causes transfer parameters (23) to be assigned to the selected source receptacle unit equivalents (16A-16K) and the target receptacle unit equivalents (16'A-16'K) assigned thereto by means of the input device (10) in such a manner in that in each case a transfer volume corresponding to the respective transfer parameter (23) is transferred from the receptacle units (5) corresponding to the selected source receptacle unit equivalents (16A-16K) into the receptacle units (5) corresponding to the assigned target receptacle unit equivalents (16'A-16'K), and
- so that the assigned target receptacle unit equivalents (16'A-16'K) are displayed in the same configuration interface (15A-15L) as the selected source receptacle unit equivalents (16A-16K).

2. The control unit (1) as claimed in claim 1, **characterized in that** the control unit (1) is configured so that the selected source receptacle unit equivalents (16A-16K) are simultaneously assigned to the target receptacle unit equivalents (16') such that the arrangement of the assigned target receptacle unit equivalents (16'A-16'K) corresponds to a reflection, rotation, row-by-row or column-by-column exchange, and/or row-by-row or column-by-column shift of the arrangement of the selected source receptacle unit equivalents (16A-16K).

3. The control unit (1) as claimed in claim 1 or 2, **characterized in that** the control unit (1) is configured so that selected unbundled source receptacle unit equivalents (16A-16K), wherein at least one unselected source receptacle unit equivalent (16A-16K) is located on one of the shortest row-column oriented paths between at least two selected source receptacle unit equivalents (16A-16K), are simultaneously assigned to target receptacle unit equivalents (16') such that the assigned target receptacle unit equivalents (16'A-16'K) are arranged in a bundled manner.

4. The control unit (1) as claimed in any one of the preceding claims, **characterized in that** the control unit (1) is configured so that the source receptacle unit equivalents (16A-16K) are selected by means of an electronically stored selection pattern and the selection pattern is displayed in the configuration interface (15A-15L).

5. The control unit (1) as claimed in any one of the preceding claims, **characterized in that** the control unit (1) is configured so that in each case a subgroup (36) of at least one, preferably multiple target receptacle unit equivalent(s) (16'A-16'K) is assigned to one or more selected source receptacle unit equivalent(s) (16A-16K) on the basis of a pre-definable transfer pattern of receptacle unit equivalents (16) such that the arrangement and number of the target receptacle unit equivalents (16'A-16'K) of the respective subgroup (36) corresponds to the arrangement and number of the receptacle unit equivalents (16) of the transfer pattern or
multiple target receptacle unit equivalents (16'A-16'K) are simultaneously assigned to multiple selected source receptacle unit equivalents (16A-16K) on the basis of a predefinable transfer pattern of receptacle unit equivalents (16) such that the arrangement and number of the target receptacle unit equivalents (16'A-16'K) corresponds to the arrangement and number of the receptacle unit equivalents (16) of the transfer pattern.

6. Control unit (1) according to one of the preceding claims,
**characterized in that** the control unit (1) is configured so that the selected source receptacle unit equivalents (16A-16K) are divided into at least two subgroups and these subgroups are successively are assigned to target receptacle unit equivalents (16'A-16'K), wherein all source receptacle unit equivalents (16A-16K) of each subgroup are simultaneously assigned to the respective target receptacle unit equivalents (16'A-16'K).

7. A pipetting machine having a control unit (1) as claimed in any one of the preceding claims, **characterized in that** the pipetting machine (2) has at least one actuator (3A-3C) for moving a pipetting device (4) between receptacle units (5) for liquids (6) to be pipetted, wherein the pipetting device (4) is configured for receiving liquid and for dispensing liquid, and wherein the actuator (3A-3C) is controlled by the control unit (1).

8. Method for controlling a pipetting machine (2) for controlling at least one actuator (3A-3C) of the pipetting machine (2), wherein the actuator (3A-3C) is configured for moving a pipetting device (4) of the pipetting machine (2) between receptacle units (5) for liquids (6) to be pipetted, wherein the pipetting device (4) is configured for receiving liquids (6) to be pipetted and for dispensing liquids (6) to be pipetted, with a control unit (1) having an input unit (10) and a display unit (13),
wherein a plurality of configuration interfaces (15A-15L) are displayed by the display unit (13), and
wherein a plurality of graphic source receptacle equivalents (16) corresponding to receptacle units (5) and each representing at least one receptacle unit (5) are displayed on the display unit (13) in a configuration interface (15A-15L),
wherein in the configuration interface (15A-15L) a plurality of receptacle unit equivalents (16) from whose corresponding receptacle units (5) liquid (6) is to be retrieved are successively or simultaneously selected as source receptacle unit equivalents (16A-16K) of a source pipetting unit equivalent (18),
- wherein. in the configuration interface (15A-15L), a graphical representation of the selected source receptacle unit equivalents (16A-16K) is first generated by selecting the source receptacle unit equivalents (16A-16K),
- wherein, in the configuration interface (15A-15L), the graphical representation of the selected source receptacle unit equivalents (16A-16K) is then modified with respect to the number and/or arrangement of the selected source receptacle unit equivalents (16A-16K),
- wherein, in the configuration interface (15A-15L), finally, on the basis of the graphical representation, a plurality of further receptacle unit equivalents (16') are selected as target receptacle unit equivalents (16'A-16'K), into whose corresponding receptacle units (5) liquid (6) is to be dispensed, and thereby the selected source receptacle unit equivalents (16A-16K) are simultaneously assigned to the selected target receptacle unit equivalents (16'A-16'K) such that the arrangement and/or number of the associated target receptacle unit equivalents (16'A-16'K) differs from the arrangement and/or number of the selected source receptacle unit equivalents (16A-16K),
- which causes transfer parameters (23) to be assigned to the selected source receptacle unit equivalents (16A-16K) and the target receptacle unit equivalents (16'A-16'K) assigned thereto by means of the input unit (10) in such a manner that in each case a transfer volume corresponding to the respective transfer parameter (23) is transferred from the receptacle units (5) corresponding to the selected source receptacle unit equivalents (16A-16K) into the receptacle units (5) corresponding to the assigned target receptacle unit equivalents (16'A-16'K), and
- wherein the associated target receptacle unit equivalents (16'A-16'K) are displayed in the same configuration interface (15A-15L) as the selected source receptacle unit equivalents (16A-16K).

9. The method as claimed in claim 8, wherein the selected source receptacle unit equivalents (16A-16K) are simultaneously assigned to the target receptacle unit equivalents (16'A-16'K) such that the arrangement of the assigned target receptacle unit equivalents (16'A-16'K) corresponds to a reflection, rotation, row-by-row or column-by-column exchange, and/or row-by-row or column-by-column shift of the arrangement of the selected source receptacle unit equivalents (16A-16K).

10. The method as claimed in claim 8 or 9, **characterized in that** selected unbundled source receptacle unit equivalents (16A-16K), wherein at least one unselected source receptacle unit equivalent (16A-16K) is located on one of the shortest row-column oriented paths between at least two selected source receptacle unit equivalents (16A-16K), are simultaneously assigned to target receptacle unit equivalents (16'A-16'K) such that the assigned target receptacle unit equivalents (16'A-16'K) are arranged in a bundled manner.

11. The method as claimed in any one of claims 8 to 10, **characterized in that** the source receptacle unit equivalents (16A-16K) are selected by means of an electronically stored selection pattern and the selection pattern is displayed in the configuration interface (15A-15L).

12. The method as claimed in any one of claims 8 to 11, **characterized in that** in each case a subgroup (36) of at least one, preferably multiple target receptacle unit equivalent(s) (16'A-16'K) is assigned to one or more selected source receptacle unit equivalent(s) (16A-16K) on the basis of a pre-definable transfer pattern of receptacle unit equivalents (16) such that the arrangement and number of the assigned target receptacle unit equivalents (16'A-16'K) of the respective subgroup (36) corresponds to the arrangement and number of the receptacle unit equivalents (16) of the transfer pattern, or
multiple target receptacle unit equivalents (16'A-16'K) are simultaneously assigned to multiple selected source receptacle unit equivalents (16A-16K) on the basis of a pre-definable transfer pattern of receptacle unit equivalents (16) such that the arrangement and number of the target receptacle unit equivalents (16'A-16'K) corresponds to the arrangement and number of the receptacle unit equivalents (16) of the transfer pattern.

13. Method according to any one of claims 8 to 12, **characterized in that** the selected source receptacle unit equivalents (16A-16K) are divided into at least two subgroups and these subgroups are successively assigned to the target receptacle unit equivalents (16'A-16'K),
wherein all source receptacle unit equivalents (16A-16K) of each subgroup are simultaneously assigned to the respective target receptacle unit equivalents (16'A-16'K).

14. A computer program product having program code means which are configured to execute the method as claimed in any one of claims 8 to 13, when the program code means are executed on a computer or by a processor.

## Revendications

1. Dispositif de commande (1) pour commander une machine de pipetage automatique (2), dans lequel
- le dispositif de commande (1) est conçu pour commander au moins un actionneur (3A-3C) de la machine de pipetage automatique (2), l'actionneur (3A-3C) étant conçu pour déplacer un dispositif de pipetage (4) de la machine de pipetage automatique (2) entre des dispositifs de réception (5) pour des liquides (6) à pipeter, le dispositif de pipetage (4) étant conçu pour recevoir des liquides (6) à pipeter et pour délivrer des liquides (6) à pipeter,
- le dispositif de commande (1) comprend un dispositif d'entrée (10) et un dispositif d'affichage (13), dans lequel une pluralité de surfaces de configuration (15A-15L) sont affichées par le dispositif d'affichage (13),
et le dispositif de contrôle (1) est conçu de manière à ce que,
- une pluralité d'équivalents de dispositif de réception graphiques (16) correspondant à des dispositif de réception (5) et représentant chacun au moins un dispositif de réception (5) sont affichés sur le dispositif d'affichage (13) dans une interface de configuration (15A-15L),
- à ce que, dans l'interface de configuration (15A-15L), une pluralité d'équivalents de dispositif de réception (16), à partir de dispositif de réception correspondantes (5) desquelles du liquide (6) doit être retiré, sont successivement ou simultanément sélectionnés comme équivalents de dispositif de réception source (16A-16K) d'un équivalent d'unité de pipetage source (18),
- à ce qu'une représentation graphique des équivalents de dispositif de réception source sélectionnés (16A-16K) est d'abord générée dans l'interface de configuration (15A-15L) en sélectionnant les équivalents de dispositif de réception source (16A-16K),
- à ce que, dans l'interface de configuration (15A-15L), la représentation graphique des équivalents de dispositif de réception de source sélectionnés (16A-16K) est ensuite modifiée en ce qui concerne le nombre et/ou la disposition des équivalents de dispositif de réception de source sélectionnés (16A-16K),
- que dans l'interface de configuration (15A-15L), enfin, sur la base de la représentation graphique, plusieurs autres équivalents de dispositif de réception (16') sont sélectionnés comme équivalents de dispositif de réception cibles (16'A-16'K) dans les dispositifs de réception correspondants (5) desquels le liquide (6) doit être distribué, et ainsi les équivalents de dispositif de réception de source sélectionnés (16A-16K) sont simultanément associés aux équivalents de dispositif de réception cibles sélectionnés (16'A-16'K) de sorte que la disposition et/ou le nombre des équivalents de dispositif de réception cibles associés (16'A-16'K) diffère de la disposition et/ou du nombre des équivalents de dispositif de réception de source sélectionnés (16A-16K),
- par lequel des paramètres de transfert (23) sont affectés aux équivalents de dispositif de réception de source sélectionnés (16A-16K) et aux équivalents de dispositif de réception cibles (16'A-16'K) qui leur sont affectés au moyen du dispositif d'entrée (10) de cette manière, en ce que, dans chaque cas, un volume de transfert correspondant au paramètre de transfert respectif (23) est transféré des dispositifs de réception (5) correspondant aux équivalents de dispositif de réception source sélectionnés (16A-16K) dans les dispositifs de réception (5) correspondant aux équivalents de dispositif de réception cibles associés (16'A-16'K), et
- à ce que les équivalents de dispositif de réception cibles associés (16'A-16'K) sont représentés dans la même interface de configuration (15A-15L) que les équivalents de dispositif de réception de source sélectionnés (16A-16K) .

2. Dispositif de commande (1) selon la revendication 1, **caractérisé en ce que** le dispositif de commande (1) est conçu pour affecter simultanément les équivalents de dispositif de réception de source sélectionnés (16A-16K) aux équivalents de dispositif de réception cibles (16') de telle sorte que l'agencement des équivalents de dispositif de réception cibles associés (16'A-16'K) correspond à un miroir, une rotation, un échange ligne par ligne ou colonne par colonne et/ou un déplacement ligne par ligne ou colonne par colonne de l'agencement des équivalents de dispositif de réception de source sélectionnés (16A-16K).

3. Dispositif de commande (1) selon la revendication 1 ou 2, **caractérisé en ce que** le dispositif de commande (1) est adapté pour sélectionner des équivalents de dispositif de réception de source (16A-16K), dans lesquels au moins un équivalent de dispositif de réception de source non sélectionné (16A-16K) est situé sur l'un des chemins les plus courts orientés le long des lignes et des colonnes entre au moins deux équivalents de dispositif de réception de source sélectionnés (16A-16K), sont simultanément affectés à des équivalents de dispositif de réception cibles (16'A-16'K) de telle sorte que les équivalents de dispositif de réception cibles associés (16'A-16'K) soient disposés en un faisceau.

4. Dispositif de commande (1) selon l'une quelconque des revendications précédentes, **caractérisé en ce que** le dispositif de commande (1) est adapté pour sélectionner les équivalents de dispositif de réception de source (16A-16K) au moyen d'un modèle de sélection stocké électroniquement et pour afficher le modèle de sélection dans l'interface de configuration (15A-15L).

5. Dispositif de commande (1) selon l'une des revendications précédentes, **caractérisé en ce que** le dispositif de commande (1) est conçu de telle sorte qu'un ou plusieurs équivalents de dispositif de réception de source sélectionnés (16A-16K) sont affectés chacun à un sous-groupe (36) d'au moins un équivalent de dispositif de réception cibles (16'A-16'K) sur la base d'un modèle de transfert prédéterminable d'équivalents de dispositif de réception (16), de préférence une pluralité d'équivalents de dispositifs de réception cibles (16'A-16'K) de telle sorte que la disposition et le nombre des équivalents de dispositifs de réception cibles (16'A-16'K) du sous-groupe respectif (36) correspondent à la disposition et au nombre des équivalents de dispositifs de réception (16) du motif de transfert ou
**en ce qu'**une pluralité d'équivalents de dispositif de réception de source sélectionnés (16A-16K) sont simultanément affectés à une pluralité d'équivalents de dispositif de réception cibles (16'A-16'K) sur la base d'un motif de transfert prédéterminable d'équivalent de dispositif de réception (16) de telle sorte que la disposition et le nombre des équivalents de dispositif de réception cibles (16'A-16'K) correspondent à la disposition et au nombre des équivalents de dispositif de réception (16) du motif de transfert.

6. Dispositif de commande (1) selon l'une des revendications précédentes, **caractérisé en ce que** le dispositif de commande (1) est conçu à cet effet, **caractérisé en ce que** les équivalents de dispositif de réception de source sélectionnés (16A-16K) sont divisés en au moins deux sous-groupes et ces sous-groupes sont affectés successivement aux équivalents de dispositif de réception cibles (16'A-16'K), dans lequel tous les équivalents de dispositif de réception de source (16A-16K) de chaque sous-groupe sont simultanément affectés aux équivalents de dispositif de réception cibles respectifs (16'A-16'K').

7. Machine de pipetage automatique avec un dispositif de commande (1) selon l'une des revendications précédentes, dans laquelle la machine de pipetage automatique (2) comporte au moins un actionneur (3A-3C) pour déplacer un dispositif de pipetage (4) entre des dispositifs de réception (5) de liquides (6) à pipeter, dans laquelle le dispositif de pipetage (4) est conçu pour recevoir du liquide et pour distribuer du liquide et dans laquelle l'actionneur (3A-3C) est commandé par le dispositif de commande (1).

8. Procédé de commande d'une machine de pipetage automatique (2) pour commander au moins un actionneur (3A-3C) de la machine de pipetage automatique (2), l'actionneur (3A-3C) étant conçu pour déplacer un dispositif de pipetage (4) de la machine de pipetage automatique (2) entre des dispositifs de réception (5) de liquides (6) à pipeter, dans lequel le dispositif de pipetage (4) est conçu pour recevoir des liquides (6) à pipeter et pour délivrer des liquides (6) à pipeter, avec un dispositif de commande (1) comprenant un dispositif d'entrée (10) et un dispositif d'affichage (13),
dans lequel une pluralité de interfaces de configuration (15A-15L) sont affichées par le dispositif d'affichage (13), et
dans lequel une pluralité d'équivalents de dispositif de réception graphiques (16) correspondant à des dispositifs de réception (5) et représentant chacun au moins un dispositif de réception (5) sont affichés sur le dispositif d'affichage (13) dans une interface de configuration (15A-15L),
dans lequel, dans l'interface de configuration (15A-15L), une pluralité d'équivalents de dispositif de réception (16) à partir des dispositifs de réception correspondantes (5) desquelles le liquide (6) doit être retiré sont successivement ou simultanément sélectionnés comme équivalents de dispositif de réception source (16A-16K) d'un équivalent d'unité de pipetage source (18),
- dans lequel dans l'interface de configuration (15A-15L), une représentation graphique des équivalents de dispositif de réception de source sélectionnés (16A-16K) est d'abord générée en sélectionnant les équivalents de dispositif de réception de source (16A-16K),
- dans lequel, dans l'interface de configuration (15A-15L), la représentation graphique des équivalents de dispositif de réception de source sélectionnés (16A-16K) est ensuite modifiée en ce qui concerne le nombre et/ou la disposition des équivalents de dispositif de réception de source sélectionnés (16A-16K),
- dans lequel dans l'interface de configuration (15A-15L), finalement, sur la base de la représentation graphique, une pluralité d'autres équivalents de dispositif de réception (16') sont sélectionnés comme équivalents de dispositif de réception cibles (16'A-16'K) dans les dispositifs de réception correspondants (5) desquels le liquide (6) doit être distribué, et ainsi les équivalents de dispositif de réception de source sélectionnés (16A-16K) sont simultanément associés aux équivalents de dispositif de réception cibles sélectionnés (16'A-16'K) de sorte que la disposition et/ou le nombre des équivalents de dispositif de réception cibles associés (16'A-16'K) diffère de la disposition et/ou du nombre des équivalents de dispositif de réception de source sélectionnés (16A-16K),
- par lequel des paramètres de transfert (23) sont affectés aux équivalents de dispositif de réception de source sélectionnés (16A-16K) et aux équivalents de dispositif de réception cibles (16'A-16'K) qui leur sont affectés au moyen du dispositif d'entrée (10) de cette manière, en ce que, dans chaque cas, un volume de transfert correspondant au paramètre de transfert respectif (23) est transféré des dispositifs de réception (5) correspondant aux équivalents de dispositif de réception de source sélectionnés (16A-16K) dans les dispositifs de réception (5) correspondant aux équivalents de dispositif de réception cibles associés (16'A-16'K), et
- dans lequel les équivalents de dispositif de réception cibles associés (16'A-16'K) sont représentés dans la même interface de configuration (15A-15L) que les équivalents de dispositif de réception de source sélectionnés (16A-16K).

9. Procédé selon la revendication 8, **caractérisé en ce que** les équivalents de dispositif de réception de source sélectionnés (16A-16K) sont simultanément associés aux équivalents de dispositif de réception cibles (16'A-16'K) de sorte que l'agencement des équivalents de dispositif de réception cibles associés (16'A-16'K) correspond à un miroir, une rotation, un échange en rangée ou en colonne et/ou un décalage en rangée ou en colonne de l'agencement des équivalents de dispositif de réception de source sélectionnés (16A-16K).

10. Procédé selon la revendication 8 ou 9, **caractérisé en ce que** les équivalents de dispositif de réception de source non groupés sélectionnés (16A-16K) ont au moins un équivalent de dispositif de réception de source non sélectionné (16A-16K) situé sur l'un des chemins orientés ligne-colonne les plus courts entre au moins deux équivalents de dispositif de réception de source sélectionnés (16A-16K), en même temps, des équivalents de dispositif de réception cibles (16'A-16'K) sont attribués de telle manière que les équivalents de dispositif de réception cibles attribués (16'A-16'K) sont disposés en un faisceau.

11. Procédé selon l'une quelconque des revendications 8 à 10, **caractérisé en ce que** les équivalents de dispositif de réception de source (16A-16K) sont sélectionnés au moyen d'un motif de sélection stocké électroniquement et le motif de sélection est affiché dans l'interface de configuration (15A-15L).

12. Procédé selon l'une quelconque des revendications 8 à 11, **caractérisé en ce qu'**un ou plusieurs équivalents de dispositif de réception de source sélectionnés (16A-16K) se voient attribuer chacun un sous-groupe (36) d'au moins un équivalent de dispositif de réception cible (16'A-16'K) sur la base d'un modèle de transfert prédéterminable d'équivalents de dispositif de réception (16), de préférence, une pluralité d'équivalents de dispositif de réception cibles (16'A-16'K) est attribuée de telle sorte que la disposition et le nombre des équivalents de dispositif de réception cibles attribués (16'A-16'K) du sous-groupe respectif (36) correspondent à la disposition et au nombre des équivalents de dispositif de réception (16) du modèle de transfert, ou
**en ce qu'**une pluralité d'équivalents de dispositif de réception source sélectionnés (16A-16K) sont simultanément affectés à une pluralité d'équivalents de dispositif de réception cibles (16'A-16'K) sur la base d'un motif de transfert prédéterminable d'équivalents de dispositif de réception (16) de telle sorte que la disposition et le nombre des équivalents de dispositif de réception cibles (16'A-16'K) correspondent à la disposition et au nombre des équivalents de dispositif de réception (16) du motif de transfert.

13. Procédé selon l'une quelconque des revendications 8 à 12, **caractérisé en ce que**,
les équivalents de dispositif de réception de source sélectionnés (16A-16K) sont divisés en au moins deux sous-groupes et ces sous-groupes sont attribués aux équivalents de dispositif de réception cibles (16'A-16'K) l'un après l'autre,
dans lequel tous les équivalents de dispositif de réception de source (16A-16K) de chaque sous-groupe sont simultanément affectés aux équivalents de dispositif de réception cibles respectifs (16'A-16'K).

14. Produit de programme informatique comprenant des moyens de code de programme adaptés pour réaliser le procédé de l'une quelconque des revendications 8 à 13 lorsque les moyens de code de programme sont exécutés sur un ordinateur ou par un processeur.
